# EUROPÄISCHE PATENTSCHRIFT

(11) **EP 3 258 714 B1**
(45) Veröffentlichungstag und Bekanntmachung des Hinweises auf die Patenterteilung: **27.03.2019**
(21) Anmeldenummer: 17175492.2
(22) Anmeldetag: 12.06.2017
(51) Int. Cl.: H04W 4/24, H04W 84/12

(54) **MOBILFUNKÜBERTRAGUNGSSYSTEM ZUM BEREITSTELLEN ZUMINDEST EINER MOBILFUNKZELLE IN EINEM GEBÄUDE ODER CAMPUS**
MOBILE RADIO COMMUNICATION SYSTEM FOR PROVIDING AT LEAST ONE MOBILE RADIO CELL IN A BUILDING OR CAMPUS
SYSTÈME DE RADIOCOMMUNICATION MOBILE DESTINÉ À FOURNIR AU MOINS UNE CELLULE RADIO MOBILES DANS UN BÂTIMENT OU UN CAMPUS

(30) Priorität: 17.06.2016 DE 102016111142
(43) Veröffentlichungstag der Anmeldung: 20.12.2017
(73) Patentinhaber: KATHREIN SE, 83022 Rosenheim (DE); m3connect GmbH, 52064 Aachen (DE)
(72) Erfinder: DRAGAS, Emilio, 52159 Roetgen (DE); LANKES, Andreas, Dr., 80796 München (DE); SEEOR, Alexander, 83059 Kolbermoor (DE); SCHMID, Johann, 83083 Riedering (DE); WAGNER, Christian, 83059 Kolbermoor (DE)
(74) Vertreter: Flach Bauer Stahl Patentanwälte Partnerschaft mbB

(56) Entgegenhaltungen:
- EP-A1- 2 875 668
- US-A1- 2008 081 592
- US-A1- 2012 076 047
- US-A1- 2013 072 185
- US-A1- 2015 282 042
- Zainab R. Zaidi ET AL: "An Integrated Approach for Functional Decomposition of Future RAN" In: "Energy Management in Wireless Cellular and Ad-hoc Networks", 1. Januar 2016 (2016-01-01), Springer International Publishing, Cham, XP055413238, ISSN: 2198-4182 ISBN: 978-3-319-27568-0 Bd. 50, Seiten 123-144, DOI: 10.1007/978-3-319-27568-0_6, * Seite 123 - Seite 130; Abbildungen 1, 4 *
- Anonymous: "C-RAN: Difference between revisions - Wikipedia", , 17. November 2015 (2015-11-17), XP055417098, Gefunden im Internet: URL:https://en.wikipedia.org/w/index.php?t itle=C-RAN&diff=691112882&oldid=690843234 [gefunden am 2017-10-19]
- JUHA ALA-LAURILA ET AL: "WI RELESS LOCAL AREA AND HOME NETWORKS Wireless LAN Access Network Architecture for Mobile Operators", IEEE COMMUNICATIONS MAGAZINE, 30. November 2001 (2001-11-30), Seiten 82-89, XP055420591,

## Beschreibung

Die Erfindung betrifft ein Mobilfunkübertragungssystem, mit dem zumindest eine Mobilfunkzelle in einem Gebäude oder Campus bereitstellt werden kann.

In bestimmten Gebäuden, wie Einkaufszentren oder Hotels halten sich viele Menschen auf einem kleinen Raum auf. Dadurch ergibt sich die Schwierigkeit, für all diese Menschen Datendienste bereitzustellen, die die Anbindung der Teilnehmer mit einer ausreichend hohen Geschwindigkeit erlauben. Erschwerend kommt noch hinzu, dass beispielsweise Einkaufszentren aufgrund von fehlenden Glasflächen nur schlecht durch äußere Basisstationen abgedeckt werden können. Eine ähnliche Problematik gibt es mittlerweile auch bei Gebäuden, die zwar über großflächige Glasflächen verfügen, diese Glasflächen allerdings mit verschiedenen Metallschichten (beispielsweise Kupferschichten) versehen sind, um das Auskühlen bzw. Aufheizen des Gebäudes durch äußere Witterungseinflüsse gering zu halten. Dadurch wird der Wärmeübergangswiderstand erhöht, wodurch Energiekosten zum Kühlen oder Heizen eingespart werden können. Mit derartigen Beschichtungen, die eine Schirmwirkung haben, geht allerdings ein schlechterer Mobilfunkempfang im Inneren des Gebäudes einher.

Aus diesem Grund wird dazu übergegangen, entsprechende Mobilfunkantennen innerhalb von Einkaufszentren, Bürogebäuden und Hotels zu installieren.

Bei bekannten Installationen wird lediglich die Sende- und Empfangseinheit bzw. BBU dezentral, also innerhalb des Gebäudes oder Campus betrieben. Alle anderen Einheiten, die für eine Mobilfunkverbindung erforderlich sind, werden nach wie vor zentral beim Dienstleistungsanbieter betrieben. Dies bedeutet, dass sowohl eine Verbindung für die Steuerungsschicht (engl. Control Plane) als auch für die Benutzer- bzw. Datenschicht (engl. User Plane oder Data Plane) zentral zum Dienstleistungsanbieter hin übertragen werden müssen.

Eine solche Ausgestaltung setzt eine entsprechend breitbandige Anbindung zum Dienstleistungsanbieter voraus. Dies ist umso aufwendiger, wenn gleich mehrere Mobilfunkanbieter ihre Dienstleistung innerhalb desselben Gebäudes erbringen möchten.

Ein ähnlicher Aufbau ergibt sich auch aus der US 2012/076047 A1. Hier ist eine femto-Basisstation gezeigt, die eine Mobilfunkzelle bereitstellt, über die sich ein mobiles Endgerät mit der femto-Basisstation verbinden kann. In der femto-Basisstation ist ein Packet Data Network Gateway (PDN-GW; dt. Packet-Daten-Netzwerk-Gateway) direkt integriert. Die femto-Basisstation und das PDN-GW sind über die üblichen Schnittstellen (S5, S1U und S1C) mit einem Serving-Gateway bzw. der MME verbunden, die beide direkt bei einem Betriebsunternehmen untergebracht sind. Bei einer entsprechenden Identifizierung und Autorisierung des mobilen Endgeräts durch die MME kann dieses Daten z.B. über die S1U-Schnittstelle zum Serving-GW des Betriebsunternehmens übertragen. Alternativ kann dieses bei entsprechender Identifizierung und Autorisierung auch Daten über das PDN-GW in das Residential LAN übertragen und von dort aus ggf. in das Internet.

Es ist daher die Aufgabe der Erfindung ein Mobilfunkübertragungssystem zu schaffen, mit dem zumindest eine Mobilfunkzelle in einem Gebäude oder Campus bereitgestellt werden kann, wobei die Installationskosten geringer sein sollen als bei derzeit eingesetzten Systemen. Unter einem Campus sind mehrere benachbarte und/oder zusammenhängende Gebäudekomplexe und optional auch die Fläche, die direkt zwischen diesen Gebäudekomplexen liegt, zu verstehen.

Die Aufgabe wird durch das Mobilfunkübertragungssystem gemäß dem unabhängigen Anspruch 1 gelöst. In den abhängigen Ansprüchen sind erfindungsgemäße Weiterbildungen des Mobilfunkübertragungssystems angegeben.

Das Mobilfunkübertragungssystem umfasst zumindest eine erste Basisbandeinheit und eine erste Gateway-Einrichtung, wobei die erste Basisbandeinheit über die erste Gateway-Einrichtung mit einem Datennetz, insbesondere dem Internet verbindbar ist oder verbunden ist. Über die erste Gateway-Einrichtung werden User-Daten in das und aus dem Datennetz übertragen. Zumindest eine Sende- und Empfangseinheit ist direkt oder indirekt mit der ersten Basisbandeinheit verbunden. Bei einer direkten Verbindung ist die Sende- und/oder Empfangseinheit direkt mit der Basisbandeinheit verbunden, wohingegen bei einer indirekten Verbindung noch eine Aufbereitungs- und/oder Verteileinrichtung (beispielsweise HUB) dazwischen geschaltet ist. Die zumindest eine Sende- und/oder Empfangseinheit ist dazu ausgebildet, um zumindest eine erste Mobilfunkzelle bereitzustellen. Über diese erste Mobilfunkzelle können Informationen über eine Mobilfunkverbindung mit zumindest einem gebäudeseitigen oder gebäudenahen Teilnehmergerät ausgetauscht werden. Über diese Mobilfunkverbindung wird eine Datenverbindung zwischen dem zumindest einen Teilnehmergerät und dem Datennetzwerk über die erste Basisbandeinheit hergestellt. Weiterhin umfasst das Mobilfunkübertragungssystem eine erste Steuerungs-Einrichtung, die mit der ersten Basisbandeinheit und der ersten Gateway-Einrichtung verbunden ist. Die erste Basisbandeinheit und die erste Gateway-Einrichtung sind in dem Gebäude oder Campus installiert, in dem die zumindest eine Sende- und/oder Empfangseinheit die zumindest eine erste Mobilfunkzelle bereitstellt. Die erste Steuerungs-Einrichtung ist zum Standort, also vom Gebäude oder Campus der ersten Basisbandeinheit, der zumindest einen Sende- und/oder Empfangseinheit und der ersten Gateway-Einrichtung entfernt bei einem Betriebsunternehmen untergebracht. Dies bedeutet, dass die erste Steuerungs-Einrichtung außerhalb des Gebäudes oder Campus angeordnet ist. Erfindungsgemäß handelt es sich bei der zumindest einen Mobilfunkzelle um eine LTE-Funkzelle (engl. Long Term Evolution) und/oder um eine LTE-A Funkzelle und/oder um eine LTE Advanced Pro Funkzelle. In diesem Fall umfasst die erste Steuerungseinrichtung eine erste Mobility Management Entity (MME; dt. Mobil-Management Entität) und einen ersten Home Subscriber Server (HSS; dt. Teilnehmer Server). Die erste Gateway-Einrichtung umfasst ein erstes Serving Gateway (S-GW; dt. Dienst-Gateway) und erstes Packet Data Network Gateway (PDN-GW; dt. Packet-Daten-Netzwerk-Gateway) und ein Access-Gateway, wobei das Access-Gateway dazu ausgebildet ist, das Packet Data Network Gateway mit dem Datennetzwerk zu verbinden.

Eine Verbindung in das Internet erfolgt lokal, also vom Gebäude oder Campus ausgehend. Die Daten, die das Teilnehmergerät in das Internet übertragen möchte, müssen nicht noch über das Betriebsunternehmen geroutet werden. Im einfachsten Fall, könnte eine (V)DSL-Verbindung am Ort des Gebäudes oder Campus dazu verwendet werden, über die die Datenverbindung der einzelnen Teilnehmergeräte innerhalb des Gebäudes oder Campus zum Internet hin aufgebaut wird. Lediglich die Steuerungs-Einrichtung, bei welcher es sich auch um die Control Plane handelt, wird zentral bei einem Betriebsunternehmen vorgehalten. Diese Steuerungseinrichtung dient dabei nicht nur zum Steuern von der einen ersten Basisbandeinheit, sondern vorzugsweise von mehreren Basisbandeinheiten in unterschiedlichen Gebäuden. Die hierzu anfallenden Daten sind von der Menge her deutlich geringer als die Daten, die die Teilnehmergeräte in das Datennetzwerk, also in das Internet übertragen und von dort empfangen. Daher kann die Verbindung zu den Betriebsunternehmen, über die lediglich die Steuerungsdaten übertragen werden, deutlich schmalbandiger ausfallen als die Verbindung hin zu dem Datennetzwerk. Dies führt zu einer signifikanten Kostenersparnis.

Die erste Steuerungseinrichtung umfasst erfindungsgemäß noch eine erste Authentifikations-/ Autorisations-/ und Abrechnungsvorrichtung (z.B. 3GPP AAA Server).

Über die MME und den HSS erfolgt eine Identifizierung und Autorisierung des gebäudeinnenseitigen oder gebäudenahen Teilnehmergeräts. Die MME steht in Verbindung mit dem HSS und gleichzeitig mit der Basisbandeinheit und dem Serving Gateway. Erst bei einer positiven Authentifizierung und Autorisierung des Teilnehmergeräts ist es diesem möglich Daten über das Serving Gateway in Richtung des Packet Data Network Gateways zu übertragen.

Bei dem zumindest einen Teilnehmergerät handelt es sich erfindungsgemäß um einen Access Point. Der zumindest eine Access Point ist dazu ausgebildet über die erste Mobilfunkzelle mit der zumindest einen Sende- und/oder Empfangseinheit zu kommunizieren. Diese MobilfunkVerbindung kann auch als Backhaul-Verbindung bezeichnet werden. Der Access Point ist weiterhin dazu ausgebildet eine WLAN-Verbindung (IEEE 802.11) für zumindest ein mobiles Endgerät zur Verfügung zu stellen. Die erste MME ist dann dazu ausgebildet einen Zugriff des zumindest einen Access Points über die erste Mobilfunkzelle und die erste Basisbandeinheit und das erste Serving Gateway und das erste Packet Data Network Gateway hin zum Access-Gateway (dt. Zugriffs-Gateway) zu autorisieren. Das Access Gateway ist dem Packet Data Network Gateway nachgeschaltet. Die erste Steuerungseinrichtung umfasst erfindungsgemäß noch ein Abrechnungssystem, das mit dem Access Gateway und der Authentifikations-/ Autorisations-/ und Abrechnungsvorrichtung verbunden ist. Das Abrechnungssystem ist dazu ausgebildet, das Access Gateway dahingehend zu steuern, dass das zumindest eine mobile Endgerät Daten über die WLAN-Verbindung des zumindest einen Access Points in das Datennetzwerk übertragen kann. Dafür muss sich das mobile Endgerät an dem Access Gateway authentifizieren. Das Access Gateway kann beispielsweise im einfachsten Fall eine Passwortseite vorschalten, wobei erst bei Eingabe des richtigen Passworts eine Verbindung zu dem Datennetzwerk hergestellt werden kann. Es ist auch möglich, dass ein EAP basiertes Verfahren, insbesondere ein EAP-Sim-Verfahren (engl. Extensible Authentication Protocol SIM; dt. Erweiterbares Authentifizierungsprotokoll für SIM) oder ein EAP-AKA-Verfahren (engl. Authentication and Key Agreement; dt. Authentifizierung und Schlüsselvalidierung) eingesetzt wird, wobei das mobile Endgerät die Informationen, die im USIM (engl. Universal Subscriber Identify Module; dt. universelles Teilnehmeridentifikationsmodul) enthalten sind bzw. die davon abgeleitet werden, insbesondere diejenigen, die zur Identifizierung benötigt werden, an das Access Gateway überträgt. Dieses sendet die übermittelten Informationen weiter an das Abrechnungssystem, welches wiederum mit der Authentifikations-/ Autorisations-/ und Abrechnungsvorrichtung verbunden ist. Die Authentifikations-/ Autorisations-/ und Abrechnungsvorrichtung validiert diese Daten mit der Authentifikations-/ Autorisations-/ und Abrechnungsvorrichtung des Mobilfunkunternehmens, bei dem das mobile Endgerät registriert ist. Bei erfolgreicher Validierung erfolgt die Freischaltung des Access Gateways und die Abrechnung findet über das Konto bei dem Mobilfunkunternehmen statt.

Besonders vorteilhaft ist dabei, dass es sich bei dem Teilnehmergerät um einen Access Point handelt. Dieser Access Point umfasst vorzugsweise ebenfalls eine Sim-Karte, über die er sich an der ersten MME authentifiziert, worüber dem Access Point die Datenweiterleitung an das das Packet Data Network Gateway gestattet ist. Der Access Point selbst öffnet wiederum eine WLAN (engl. Wi-Fi) Verbindung, worüber herkömmliche mobile Endgeräte, zu denen beispielsweise Laptops oder Smartphones gehören eine Verbindung zum Access Gateway herstellen können. Besonders vorteilhaft ist hierbei, dass eine zusätzliche Netzwerkverkabelung zu den Access Points entfällt. Dies sorgt für geringere Installationskosten, weil insbesondere in großen Gebäuden die Brandschutzerfordernisse leichter zu erfüllen sind. Es muss lediglich eine Kabelverbindung zwischen der ersten Basisbandeinheit und der zumindest einen Sende- und/oder Empfangseinheit hergestellt werden. Vorzugsweise kann beispielsweise in jedem Hotelzimmer ein Access Point installiert werden, der wiederum über eine Mobilfunkverbindung, beispielsweise LTE oder LTE-A oder LTE Advanced Pro, mit der zumindest einen Sende- und/oder Empfangseinheit kommuniziert. Dadurch kann die Signalstärke des Access Points in dem jeweiligen Zimmer auf ein Minimum beschränkt werden, wobei dennoch ein ausgezeichneter WLAN-Empfang vorliegt.

Dadurch, dass auch die Abrechnungsvorrichtung zentral bei dem Betriebsunternehmen untergebracht ist, wird der administrative Aufwand innerhalb des Gebäudes oder Campus hierfür auf ein Minimum gehalten.

Die erste Basisbandeinheit wird dabei vorzugsweise von dem Unternehmen betrieben, welches auch die Access Points betreibt und die WLAN-Verbindung innerhalb des Gebäudes oder Campus bereitstellt. Bei diesem Unternehmen kann es sich auch gleichzeitig um ein Mobilfunkunternehmen handeln. Dies muss aber nicht der Fall sein.

Weiterhin ist es möglich, dass zusätzlich eine zweite und/oder zumindest eine weitere Basisbandeinheit und eine zweite und/oder zumindest eine weitere Gateway-Einrichtung installiert sind, wobei die zweite und/oder die zumindest eine weitere Basisbandeinheit über die zweite und/oder die zumindest eine weitere Gateway-Einrichtung mit dem Datennetzwerk verbindbar oder verbunden sind. Bei diesem Datennetzwerk kann es sich um das gleiche Datennetzwerk handeln, mit dem die erste Gateway-Einrichtung verbunden ist. Es kann sich allerdings auch um ein weiteres Datennetzwerk handeln. Die zweite und/oder die zumindest eine weitere Basisbandeinheit sind direkt oder indirekt mit der zumindest einen Sende- und/oder Empfangseinheit verbunden. Die zumindest eine Sende- und/oder Empfangseinheit ist in diesem Fall dazu ausgebildet, eine zweite und/oder zumindest eine weitere Mobilfunkzelle bereitzustellen. Über diese Mobilfunkzellen können weitere gebäudeinnenseitige oder gebäudenahe Teilnehmergeräte eine Datenverbindung zu dem Datennetzwerk über die zweite und/oder die zumindest eine weitere Basisbandeinheit herstellen. Dies bedeutet, dass die zumindest eine Sende- und/oder Empfangseinheit verschiedene Mobilfunkzellen auf unterschiedlichen Frequenzen bereitstellt. Die zumindest eine Sende- und/oder Empfangseinheit, bei welcher es sich im einfachsten Fall lediglich um eine Antenne handelt, ist daher entsprechend breitbandig ausgelegt. Weiterhin gibt es in diesem erfindungsgemäßen Ausführungsbeispiel eine zweite und/oder zumindest eine weitere Steuerungseinrichtung, die mit der zweiten und/oder der zumindest einen weiteren Basisbandeinheit und/oder mit der zweiten und/oder der zumindest einen weiteren Gateway-Einrichtung verbunden sind. Die zweite und/oder die zumindest eine weitere Basisbandeinheit und die zweite und/oder die zumindest eine weitere Gateway-Einrichtung sind in dem Gebäude oder Campus installiert, in dem die zumindest eine Sende- und/oder Empfangseinheit die Vielzahl der Mobilfunkzellen bereitstellt. Im Gegensatz dazu ist die zweite und/oder die zumindest eine weitere Steuerungseinrichtung vom Standort der zweiten und/oder der zumindest einen weiteren Basisbandeinheit entfernt bei dem gleichen oder bei zumindest einem anderen Betriebsunternehmen untergebracht.

Besonders vorteilhaft ist, dass mehrere Basisbandeinheiten mit einer Sende- und/oder Empfangseinheit verbunden werden können. Diese weiteren Basisbandeinheiten können von unterschiedlichen Mobilfunkunternehmen betrieben werden. Diese Basisbandeinheiten stellen Signale auf unterschiedlichen Frequenzen zur Verfügung, die durch die Sende- und/oder Empfangseinheit abgestrahlt werden, wodurch eine Mobilfunkzelle gebildet wird. Auch bei diesen weiteren Mobilfunkzellen ist es so, dass die Komponenten der "User Plane" innerhalb des Gebäudes oder Campus installiert sind, wohingegen die Komponenten der "Control Plane" zentral bei dem jeweiligen Betriebsunternehmen untergebracht sind. Dadurch kann für die User Daten eine lokale Internetverbindung am Ort des Gebäudes oder Campus installiert werden, wohingegen über eine schmalbandigere Datenleitung die entsprechenden Steuerdaten über die "Control Plane" an das Betriebsunternehmen übermittelt werden.

In einem weiteren Ausführungsbeispiel der Erfindung werden die zweite und/oder die zumindest eine weitere Mobilfunkzelle durch die Sende- und/oder Empfangseinheit in einem Frequenzbereich betrieben, der zumindest einem Mobilfunkunternehmen zugewiesen ist, welches Mobilfunkdienstleistungen außerhalb des Gebäudes oder Campus anbietet. In diesem Fall merkt ein Nutzer des entsprechenden Mobilfunkunternehmens überhaupt nicht, dass er sich in einer Mobilfunkzelle innerhalb des Gebäudes oder Campus eingebucht hat. Anrufe und Datendienste werden weiterhin zugestellt bzw. sind verfügbar.

In einem weiteren Ausführungsbeispiel der Erfindung wird die erste Mobilfunkzelle nicht von einem der am Ort des Gebäudes oder Campus verfügbaren Mobilfunkunternehmen betrieben. Aus diesem Grund ist es vorteilhaft, wenn die erste Mobilfunkzelle in einem Frequenzbereich betrieben wird, der von Mobilfunkunternehmen außerhalb des Gebäudes oder Campus nicht verwendet wird.

Die zweite und/oder die zumindest eine weitere Steuerungseinrichtung umfassen ebenfalls eine zweite und/oder zumindest eine weitere Mobility Management Entity (MME) und einen zweiten und/oder zumindest einen weiteren Home Subscriber Server (HSS). Die zweite und/oder die zumindest eine weitere Steuerungseinrichtung umfassen außerdem eine zweite und/oder zumindest eine weitere Authentifikations- /Autorisations-/ und Abrechnungsvorrichtung. Vorzugsweise sind dabei die Authentifikations-/Autorisations-/ und Abrechnungsvorrichtungen aller Steuerungseinrichtungen miteinander zum Datenaustausch verbunden. Dadurch kann beispielsweise ein Kunde eines Mobilfunkunternehmens die Infrastruktur eines anderen Mobilfunkunternehmens nutzen, wobei das verbrauchte Datenvolumens entsprechend abgerechnet werden kann.

Die zweite und/oder die zumindest eine weitere Gateway-Einrichtung umfassen außerdem ein zweites und/oder zumindest ein weiteres Serving Gateway und ein zweites und/oder zumindest ein weiteres Packet Data Network Gateway. Das zweite und/oder das zumindest eine weitere Packet Data Network Gateway sind mit dem Datennetzwerk verbunden. In diesem Fall gibt es vorzugsweise kein Access-Gateway zwischen dem zweiten und/oder dem zumindest einen weiteren Packet Data Network Gateway. Daher sind das zweite und/oder das zumindest eine weitere Packet Data Network Gateway direkt mit dem Datennetzwerk verbunden oder verbindbar.

In einem weiteren Ausführungsbeispiel der Erfindung umfasst das Mobilfunkübertragungssystem noch eine Aufbereitungs- und/oder Verteileinrichtung (Central Hub), die mit allen Basisbandeinheiten und mit der zumindest einen Sende- und/oder Empfangseinheit verbunden ist. Die Aufbereitungs- und/oder Verteileinrichtung ist dazu ausgebildet, die von der ersten Basisbandeinheit erzeugten Signale an die entsprechende zumindest eine Sende- und/oder Empfangseinheit weiterzuleiten. Vorzugsweise ermittelt die Aufbereitungs- und/oder Verteileinrichtung selbst die entsprechende Sende- und/oder Empfangseinheit, an die das jeweilige Teilnehmersignal weitergeleitet werden soll.

Die Aufbereitungs- und/oder Verteileinrichtung ist dazu ausgebildet, die von der zumindest einen Sende- und/oder Empfangseinheit empfangenen Signale von der ersten Mobilfunkzelle bzw. von den weiteren Mobilfunkzellen an die erste Basisbandeinheit bzw. die weiteren Basisbandeinheiten weiterzuleiten. Wird ein Signal über die erste Mobilfunkzelle empfangen, so wird dieses an die erste Basisbandeinheit weitergeleitet. Gleiches gilt für die empfangenen Signale in der zweiten oder der zumindest einen weiteren Mobilfunkzelle. Diese werden an die zweite bzw. an die zumindest eine weitere Basisbandeinheit weitergeleitet.

Die Aufbereitungs- und/oder Verteileinrichtung kann außerdem dazu ausgebildet sein, ein Signal in seiner Amplitude und/oder Frequenz zu verstärken bzw. umzusetzen. Dies gilt für Signale, die von der zumindest einen Sende- und/oder Empfangseinheit angekommen, wie auch für Signale, die von der jeweiligen Basisbandeinheit erzeugt und an die zumindest eine Sende- und/oder Empfangseinheit übertragen werden sollen.

Vorzugsweise gibt es eine Vielzahl von weiteren Sende- und/oder Empfangseinheiten, die mit der Aufbereitungs- und/oder Verteileinrichtung verbunden und dazu ausgebildet sind, eine Vielzahl von Mobilfunkzellen bereitzustellen. Dabei kann jede Sende- und/oder Empfangseinheit mehrere Mobilfunkzellen auf unterschiedlichen Frequenzbereichen bereitstellen. Diese Mobilfunkzellen sind vorzugsweise als Mikrozellen ausgebildet und decken einen Bereich mit einem Durchmesser von weniger als 50 m, vorzugsweise von weniger als 40 m und weiter vorzugsweise von weniger als 30 m ab.

Bei dem zumindest einen Teilnehmergerät kann es sich auch um ein weiteres mobiles Endgerät handeln. Das weitere mobile Endgerät ist dann dazu ausgebildet, eine Mobilfunkverbindung über die zweite und/oder die zumindest eine weitere Mobilfunkzelle mit der zweiten und/oder der zumindest einen weiteren Basisbandeinheit herzustellen. In diesem Fall würden die Access Points nicht verwendet werden. Die weiteren mobilen Endgeräte nutzen daher unterschiedliche Mobilfunkzellen verglichen mit den Access Points. Die zweite und/oder die zumindest eine weitere Mobility Management Entity sind dann dazu ausgebildet, einen Zugriff des zumindest einen weiteren mobilen Endgeräts über die zweite und/oder die zumindest eine weitere Mobilfunkzelle, die zweite und/oder die zumindest eine weitere Basisbandeinheit, das zweite und/oder das zumindest eine weitere Serving Gateway und das zweite und/oder das zumindest eine weitere Packet Data Network Gateway hin zum Datennetzwerk zu erlauben.

In diesem Fall ist es besonders vorteilhaft, dass bei dem erfindungsgemäßen Mobilfunkübertragungssystem sowohl bekannte Mobilfunkunternehmen als auch lokale WLAN-Betreiber innerhalb ihres Gebäudes oder Campus ihre Dienstleistungen störungsfrei zueinander anbieten können, wobei die Verwaltung dieser Dienstleistungen zentral außerhalb des Gebäudes oder Campus bei den Mobilfunkunternehmen bzw. bei dem Anbieter der WLAN-Verbindung erfolgt. Dadurch kann der Installationsaufwand innerhalb des Gebäudes oder Campus auf ein Minimum beschränkt werden.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnung zeigen im Einzelnen:
- Figur 1:: ein Gebäude, in welchem das erfindungsgemäße Mobilfunkübertragungssystem installiert ist;
- Figur 2:: verschiedene Räume des Gebäudes, wobei in jedem Raum ein Teilnehmergerät in Form eines Access Points montiert ist, das mit einer gemeinsamen Sende- und/oder Empfangseinheit über eine Mobilfunkverbindung in Kontakt stehen;
- Figur 3:: eine Übersicht über die an die zumindest eine Sende- und/oder Empfangseinheit angeschlossenen Teilnehmergeräte;
- Figur 4:: eine Übersicht des erfindungsgemäßen Mobilfunkübertragungssystems mit einer ersten Basisbandeinheit und den dazugehörigen Komponenten der Steuerungs-Einrichtung und der Gateway-Einrichtung;
- Figur 5:: eine Übersicht über das erfindungsgemäße Mobilfunksystem mit drei Basisbandeinheiten und den dazugehörigen Komponenten der Steuerungs-Einrichtung und der Gateway-Einrichtung, wobei die Verbindungen zur Steuerungs-Einrichtung gestrichelt dargestellt sind; und
- Figur 6:: eine weitere Übersicht über das erfindungsgemäße Mobilfunkübertragungssystem mit drei Basisbandeinheiten und den dazugehörigen Komponenten der Steuerungs-Einrichtung und der Gateway-Einrichtung.

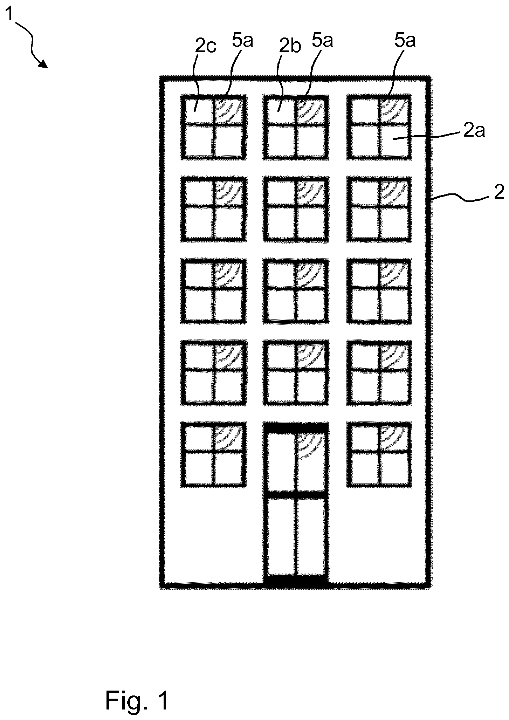

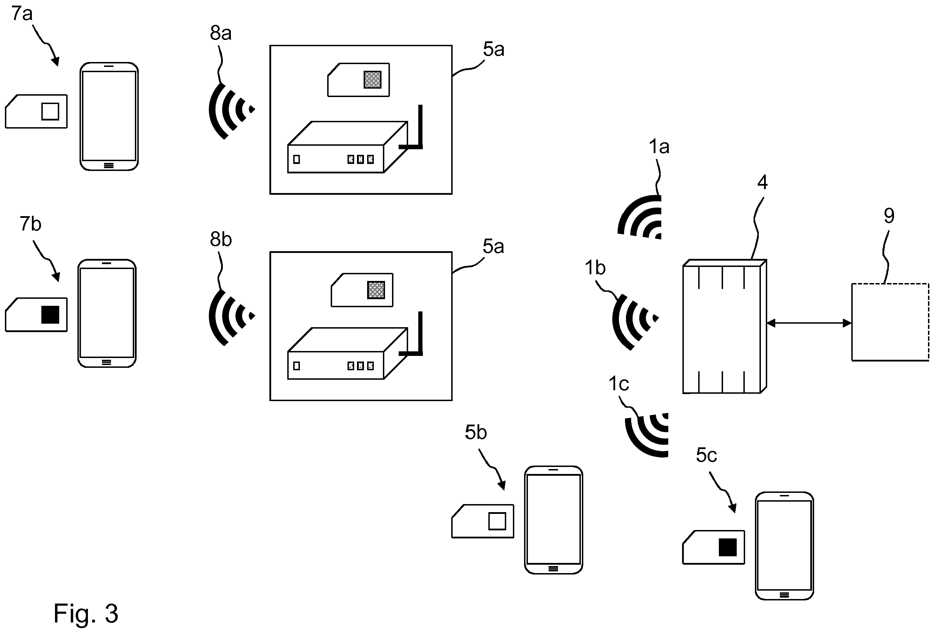

Figur 1 zeigt das erfindungsgemäße Mobilfunkübertragungssystem 1, das in einem Gebäude 2 oder Campus installiert ist. Ein Campus umfasst dabei mehrere, vorzugsweise benachbarte Gebäude oder Gebäudekomplexe. Das Mobilfunkübertragungssystem 1 erzeugt zumindest eine, vorzugsweise eine Vielzahl von Mobilfunkzellen 1a, 1b, 1c (siehe Figur 3), die auf unterschiedlichen Frequenzbereichen betrieben werden. Innerhalb des Gebäudes 2, bei welchem es sich vorzugsweise um ein Hotel, ein Einkaufszentrum oder einem Bürokomplex handelt, wird durch das erfindungsgemäße Mobilfunkübertragungssystem 1, wie später noch erläutert wird, eine Mobilfunk- und/oder WLAN-Abdeckung sichergestellt. Bei den Mobilfunkzellen 1a, 1b, 1c handelt es sich vorzugsweise um sogenannte Mikrozellen, die einen Bereich abdecken, dessen Durchmesser kleiner ist als 50 m, vorzugsweise kleiner ist als 40 m, weiter vorzugsweise kleiner ist als 30 m. Dadurch, dass das Mobilfunkübertragungssystem 1 innerhalb des Gebäudes 2 installiert ist, wirken sich dessen Außenwände und dessen beschichtete Fenster nicht negativ auf die Empfangsqualität innerhalb des Gebäudes 2 aus.

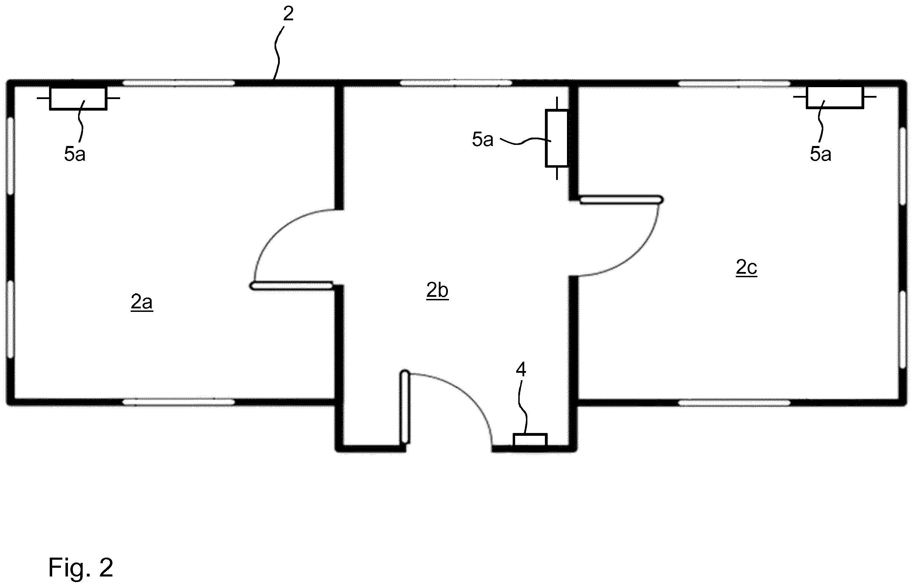

Figur 2 zeigt eine vereinfachte Darstellung von verschiedenen Räumen 2a, 2b, 2c innerhalb des Gebäudes 2.

Dargestellt ist, dass eine Sende- und/oder Empfangseinheit 4 in einem dieser Räume 2b installiert ist. Die zumindest eine Sende- und/oder Empfangseinheit 4 ist dazu ausgebildet, um zumindest eine erste Mobilfunkzelle 1a bereitzustellen. Über diese erste Mobilfunkzelle 1a können Informationen über eine Mobilfunkverbindung mit zumindest einem gebäudeinnenseitigen oder gebäudenahen Teilnehmergerät 5a, 5b, 5c ausgetauscht werden. Bei dem gebäudeinnenseitigen oder gebäudenahen Teilnehmergerät 5a handelt es sich in diesem Fall vorzugsweise um einen Access Point 5a.

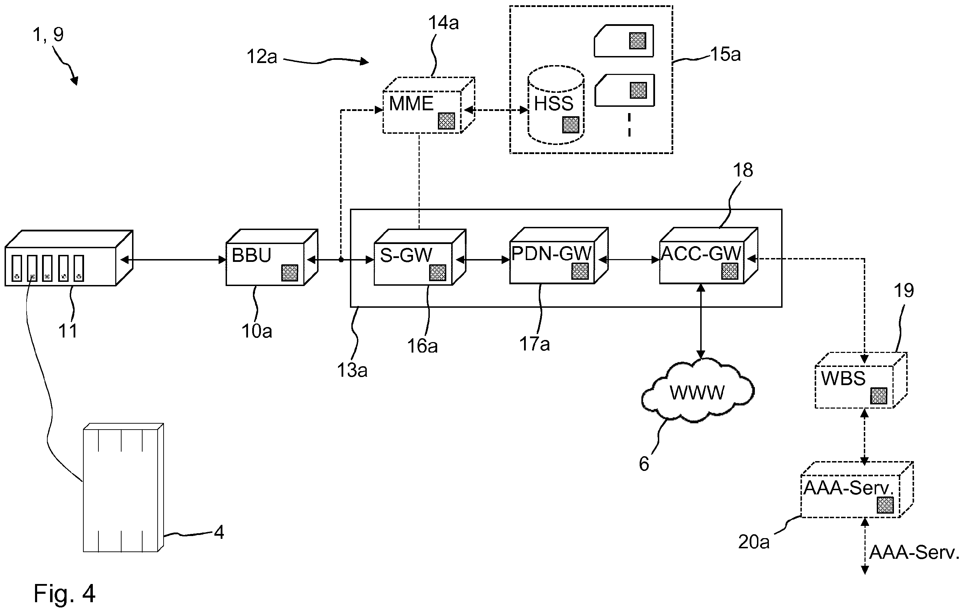

Vorzugsweise befindet sich ein solcher Access Point 5a in jedem Zimmer des Gebäudes 2, in welchem eine drahtlose WLAN-Verbindung zu einem übergeordneten Datennetzwerk 6 (siehe Figur 4) hergestellt werden soll. Dadurch, dass es einen solchen Access Point 5a vorzugsweise in jedem dieser Zimmer 2a, 2b, 2c gibt, kann dieser mit einer geringeren Sendeleistung betrieben werden, als wenn ein Access Point 5a mehrere Zimmer 2a, 2b, 2c gemeinsam versorgen müsste.

Besonders vorteilhaft ist außerdem, dass der Access Point 5a über eine drahtlose Mobilfunkverbindung mit der zumindest einen Sende- und/oder Empfangseinheit 4 verbunden ist. Dadurch entfällt eine zusätzliche Verkabelung zwischen der zumindest einen Sende- und/oder Empfangseinheit 4 und den jeweiligen Access Points 5a, die eine WLAN-Verbindung bereitstellen. Der dadurch reduzierte Verkabelungsaufwand wirkt sich positiv auf die Installationskosten (insbesondere das Brandschutzkonzept) aus.

Mit Hinblick auf Figur 3 ist eine Sende- und/oder Empfangseinheit 4 gezeigt. Diese zumindest eine Sende- und/oder Empfangseinheit 4 stellt in diesem Ausführungsbeispiel drei Mobilfunkzellen 1a, 1b, 1c bereit. Bei diesen Mobilfunkzellen 1a, 1b, 1c handelt es sich vorzugsweise um LTE-Funkzellen 1a, 1b, 1c. Über diese Mobilfunkzellen 1a, 1b, 1c ist die Sende- und/oder Empfangseinheit mit gebäudeinnenseitigen oder gebäudenahen Teilnehmergeräten 5a, 5b, 5c verbunden bzw. verbindbar. Unter einem gebäudeinnenseitigen Teilnehmergerät 5a, 5b, 5c sind Teilnehmergeräte 5a, 5b, 5c zu verstehen, die sich innerhalb des Gebäudes 2 befinden. Unter einem gebäudenahen Teilnehmergerät 5a, 5b, 5c sind Teilnehmergeräte 5a, 5b, 5c zu verstehen, die sich in unmittelbarer Umgebung des Gebäudes 2, wie einer (Dach-) Terrasse oder einem Innenhof befinden.

Über eine erste Mobilfunkzelle 1a wird eine Mobilfunkverbindung zwischen der zumindest einen Sende- und/oder Empfangseinheit 4 und den Access Points 5a hergestellt.

In Figur 4 und in nachfolgenden Figuren wird die Zugehörigkeit der einzelnen Geräte durch eine Illustration einer SIM-Karte dargestellt. Der Chip auf der SIM-Karte ist entweder gepunktet, leer oder vollausgefüllt dargestellt. Wie später noch erläutert wird, wird dadurch die Zugehörigkeit der einzelnen Geräte zu verschiedenen Betriebsnetzen (verschiedenen Mobilfunkunternehmen) symbolisiert.

Die Teilnehmergeräte 5a, bei welchen es sich vorzugsweise um die Access Points 5a handelt, kommunizieren vorzugsweise ausschließlich über eine erste Mobilfunkzelle 1a mit der zumindest einen Sende- und/oder Empfangseinheit 4. Weitere Teilnehmergeräte 5b, 5c, bei welchen es sich vorzugsweise um weitere mobile Endgeräte handelt, kommunizieren über die zweite und/oder die zumindest eine weitere (dritte) Mobilfunkzelle 1b, 1c mit der zumindest einen Sende- und/oder Empfangseinheit 4.

Die Access Points 5a sind dazu ausgebildet, eine WLAN-Verbindung für zumindest ein mobiles Endgerät 7a, 7b zur Verfügung zu stellen. Dies bedeutet, dass sich die mobilen Endgeräte 7a, 7b, zu denen auch die weiteren mobilen Endgeräte 5b, 5c gehören können, über eine WLAN-Verbindung 8a, 8b mit den Access Points 5a verbinden können. Diese Verbindung wird dann durch die Access Points 5a über deren Mobilfunkverbindung zu der zumindest einen Sende- und/oder Empfangseinheit 4 weitergeleitet. Dies bedeutet, dass die mobilen Endgeräte 7a, 7b auf das Datennetzwerk 6 zugreifen können, auch wenn sie beispielsweise mangels einer passenden Kommunikationseinrichtung (z.B. LTE-Modem) nicht dazu ausgebildet sind direkt über die Mobilfunkzellen 1a bis 1c mit der zumindest einen Sende- und/oder Empfangseinheit zu kommunizieren.

Wie später noch erläutert wird, werden die einzelnen Mobilfunkzellen 1a, 1b, 1c vorzugsweise von verschiedenen Unternehmen betrieben. Die erste Mobilfunkzelle 1a, über welche die Access Points 5a angeschlossen werden, die eine WLAN-Verbindung 8a, 8b bereitstellen, wird von einem Unternehmen betrieben, welches das Gebäude 2 oder den Campus flächendeckend mit einer WLAN-Verbindung 8a, 8b versorgen möchte. Bei diesem Unternehmen kann es sich auch um ein Mobilfunkunternehmen handeln. Die Mobilfunkzellen 1b, 1c werden dagegen vorzugsweise von Mobilfunkunternehmen betrieben, die sicherstellen möchten, dass ihre Kunden auch innerhalb des Gebäudes 2 oder Campus erreichbar sind.

Die zumindest eine Sende- und/oder Empfangseinheit ist mit einer Signalerzeugungs- und/oder Verarbeitungseinheit 9 verbunden. Diese Signalerzeugungs- und/oder Verarbeitungseinheit 9 ist in den Figuren 4, 5 und 6 vergrößert dargestellt. Generell gilt im Hinblick auf diese Figuren, dass die gestrichelten Bestandteile der Signalerzeugungs- und/oder Verarbeitungseinheit 9 zentral bei einem Betriebsunternehmen untergebracht sind, wohingegen die Komponenten, die mit einer durchgezogenen Linie dargestellt sind, dezentral in dem Gebäude 2 oder Campus untergebracht sind.

Figur 4 zeigt einen möglichen Aufbau der Signalerzeugungs- und/oder Verarbeitungseinheit 9. Die zumindest eine Sende- und/oder Empfangseinheit 4 ist mit einer ersten Basisbandeinheit 10a verbunden. Die Sende- und/oder Empfangseinheit 4 ist dabei indirekt mit der ersten Basisbandeinheit 10a verbunden. Dies bedeutet, dass zwischen der zumindest einen Sendeeinheit 4 und der ersten Basisbandeinheit 10a noch eine Aufbereitungs- und/oder Verteileinrichtung 11 geschalten ist. Die Aufbereitungs- und/oder Verteileinrichtung 11 ist dazu ausgebildet, die von der ersten Basisbandeinheit 10a erzeugten Signale an die entsprechende zumindest eine Sende- und/oder Empfangseinheit 4 weiterzuleiten. In umgekehrter Richtung ist die Aufbereitungs- und/oder Verteileinrichtung 11 ebenfalls dazu ausgebildet, die von der zumindest einen Sende- und/oder Empfangseinheit 4 empfangenen Signale der ersten Mobilfunkzelle 1a an die erste Basisbandeinheit 10a weiterzuleiten. Dabei ist die Aufbereitungs- und/oder Verteileinrichtung 11 in der Lage, eine Frequenzumsetzung und/oder Signalverstärkung von denjenigen Signalen durchzuführen, die von der jeweiligen Basisbandeinheit 10a in Richtung der zumindest einen Sende- und/oder Empfangseinheit 4 übertragen werden oder umgekehrt. Die Aufbereitungs- und/oder Verteileinrichtung 11 kann ebenfalls noch diverse Filter umfassen, so dass ausschließlich diejenigen Signale an die erste Basisbandeinheit 10a weitergeleitet werden, die auch für diese bestimmt sind. An die Aufbereitungs- und/oder Verteileinrichtung 11 können noch weitere Sende- und/oder Empfangseinheiten angeschlossen werden. Die Aufbereitungs- und/oder Verteileinrichtung 11 kann auch als Hub bezeichnet werden.

Ein direkter Anschluss der ersten Basisbandeinheit 10a an die Sende- und/oder Empfangseinheit 4 wäre auch möglich. In diesem Fall müsste die zumindest eine Sende- und/oder Empfangseinheit 4 die notwendigen Komponenten zur Signalaufbereitung erhalten. Vorzugsweise würde eine Ansteuerung der Sende- und/oder Empfangseinheit 4 zu der ersten Basisbandeinheit 10a digital und/oder analog, vorzugsweise über ein Glasfaserkabel erfolgen. Bei Einsatz der Aufbereitungs- und/oder Verteileinrichtung 11 würde die erste Basisbandeinheit 10a vorzugsweise ebenfalls über eine digitale Verbindung (vorzugsweise Glasfaser) mit der Aufbereitungs- und/oder Verteileinrichtung 11 kommunizieren.

Weiter vorzugsweise sind die Aufbereitungs- und/oder Verteileinrichtung 11 und die erste Basisbandeinheit 10a einteilig ausgebildet. Dies bedeutet, dass beide Geräte vorzugsweise in einem gemeinsamen Gehäuse untergebracht sind. Weiter vorzugsweise wäre es auch möglich, dass es mehrere Aufbereitungs- und/oder Verteileinrichtungen 11 gibt, die mit einer gemeinsamen ersten Basisbandeinheit 10a verbunden sind.

Die Aufbereitungs- und/oder Verteileinrichtung 11 und die erste Basisbandeinheit 10a sind in dem Gebäude 2 oder Campus untergebracht.

Weiterhin weist das erfindungsgemäße Mobilfunkübertragungssystem 1 ein erste Steuerungseinrichtung 12a auf, die mit der ersten Basisbandeinheit 10a, wozu auch ein Eingang/Ausgang der ersten Basisbandeinheit 10a zählt, und einer ersten Gateway-Einrichtung 13a verbunden ist. Bei der ersten Steuerungseinrichtung 12a handelt es sich vorzugsweise um die "Control Plane" (dt. Steuerungsschicht) und bei der ersten Gateway-Einrichtung 13a handelt es sich um die User Plane (dt. Datenschicht).

Wie bereits erläutert, sind die erste Basisbandeinheit 10a und die zumindest eine Sende- und/oder Empfangseinheit 4 und die erste Gateway-Einrichtung 13a in dem Gebäude 2 oder Campus installiert, in dem die zumindest eine Sende- und/oder Empfangseinheit 4 die zumindest eine erste Mobilfunkzelle 1a bereitstellt. Sie sind also dezentral angeordnet.

Im Gegensatz dazu ist die erste Steuerungseinrichtung 12a vom Standort der ersten Basisbandeinheit 10a und der ersten Gateway-Einrichtung 13a entfernt bei einem Betriebsunternehmen untergebracht. Die Entfernung kann wenige Kilometer, bis hin zu mehreren hundert Kilometern betragen.

Die erste Steuerungseinrichtung 12a umfasst eine Mobility Management Entity (MME) 14a und einen ersten Home Subscriber Server (HSS) 15a. Die MME 14a dient dazu, die Steuerung der ersten Mobilfunkzelle 1a sicherzustellen. Die erste MME 14a kümmert sich ebenfalls um die Verwaltung und Registrierung von der zumindest ersten Basisbandeinheit 10a und den Teilnehmergeräten 5a. Hierzu steht die erste MME 14a mit dem HSS 15a in Verbindung. In dem HSS 15a werden alle Informationen über die Teilnehmergeräte 5a gespeichert, die erforderlich sind, um die Teilnehmergeräte 5a zu identifizieren und diesen den Zugang zum Access Gateway 18 über die erste Mobilfunkzelle 1a zu erlauben. Weiterhin sind Informationen gespeichert, die erforderlich sind, um den Standort des Teilnehmergerätes 5a zu bestimmen. Weiterhin sind zusätzliche Informationen gespeichert, die erforderlich sind, um die für das jeweilige Teilnehmergerät 5a zugelassenen Dienste zu verwalten. Hierzu werden im HSS 15a beispielsweise Daten über den Mobilzugang abgelegt, die beispielsweise die Rufnummer des Teilnehmers, die Mobilfunkkennung des Teilnehmers (IMSI), Schlüssel, die zur Authentifizierung des Teilnehmers erforderlich sind, beinhalten.

Auf der SIM, die aufgelötet oder als Karte ausgebildet sein kann und die beispielsweise in dem Teilnehmergerät 5a (Access Point) installiert ist, sind weitere Informationen gespeichert. Hierzu gehört die Universal Integrated Circuit Card (UICC; dt. universelle integrierte Schaltkreiskarte), die Anwendungen wie Universal Subscriber Identify Module (USIM; dt. universelles Teilnehmeridentifikationsmodul) und IP Multimedia Services Identity Module (ISIM; dt. IP Identifizierungsmodul für Multimediaservice) enthält. In der USIM werden Benutzerdaten sowie Authentifizierungsdaten für das UMTS-LTE-Netzwerk gespeichert. Bei einer positiven Authentifizierung wird dem jeweiligen Teilnehmergerät 5a Zugriff auf die erste Gateway-Einrichtung 13a und dort auf das erste Packet Data Network Gateway 17a gestattet.

Die erste Gateway-Einrichtung umfasst hierzu ein erstes Serving Gateway (S-GW; dt. Dienst-Gateway) 16a und ein erstes Packet Data Network (PDN; dt. Paketdatennetzwerk). Das Serving Gateway 16a leitet und routet die Informationen weiter, die das Teilnehmergerät 5a an das Datennetzwerk 6, zu dem insbesondere das Internet gehört, weiterleiten möchte. Weiterhin werden in dem Serving Gateway 16a Pakete zwischengespeichert, die das entsprechende Teilnehmergerät 5a im Downlink von dem Datennetzwerk 6 empfangen möchte.

Über das Packet Data Network Gateway 17a wird eine Verbindung zwischen den Teilnehmergeräten 5a, 5b, 5c hin zu weiteren Datennetzen 6 hergestellt. Es weist außerdem den Teilnehmergeräten 5a, 5b, 5c eine entsprechende IP-Adresse zu.

Bei einer positiven Identifizierung der Teilnehmergeräte 5a, bei welchem es sich gemäß Figur 3 um Access Points handelt, können diese ihre Daten bis zu den Packet Data Network Gateway 17a weiterleiten. Die notwendigen Identifikationsmerkmale sind auf der SIM-Karte in den Access Points 5a gespeichert. Die Access Points 5a verfügen weiterhin über eine IMEI (International Mobile Equipment Identity; dt. internationale mobile Teilnehmeridentifikationsnummer) . Wie bereits erläutert, handelt es sich bei der ersten Basisbandeinheit 10a um eine Basisbandeinheit 10a, die lediglich zur Anbindung der Access Points 5a dient. Über diese erste Basisbandeinheit 10a können Internetdienstleistungen in Hotels angeboten werden. Gäste können sich mit ihren mobilen Endgeräten 7a, 7b an den Access Points 5a anmelden. Aufgrund der bereits erfolgten Identifizierung und Authentifizierung der Access Points 5a und deren Autorisation, können die mobilen Endgeräte 7a, 7b ihre Daten über die WLAN-Verbindung 8a, 8b zu den entsprechenden Access Points 5a weiterleiten, die diese wiederum an die zumindest eine Sende- und/oder Empfangseinheit 4 übermitteln. Über die zumindest eine Sende- und/oder Empfangseinheit 4 werden diese Daten an die erste Basisbandeinheit 10a weitergeleitet. Die Steuerschicht (Control plane) der ersten Basisbandeinheit 10a ist mit der ersten MME 14a verbunden. Die erste Basisbandeinheit 10a wandelt die Signale der zumindest einen Sende- und/oder Empfangseinheit 4 in Pakete für die Datenverarbeitung um und sendet diese Nutzerdaten (User Data) an das Serving Gateway 16a. Der Vorgang erfolgt in analoger Art und Weise für die Empfangsrichtung (Downlink). Das Serving Gateway 16a wurde bereits durch die MME 14a dahingehend autorisiert, dass die Daten, welche von den Access Points 5a empfangen werden, weiter an das Packet Data Network Gateway 17a übertragen werden dürfen.

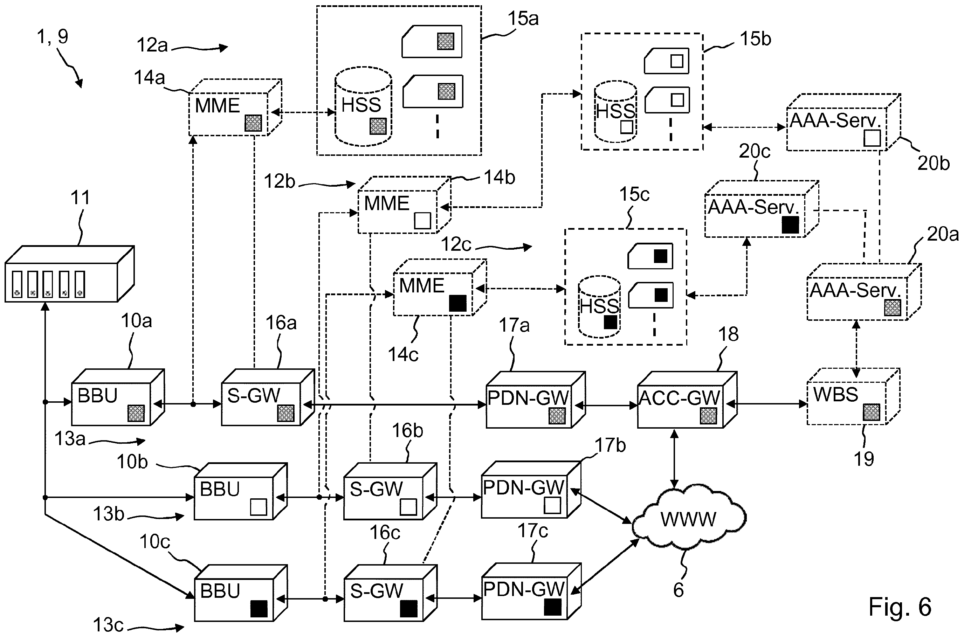

Das Packet Data Network Gateway 17a könnte beispielsweise im Weiteren direkt mit dem Datennetzwerk 6 verbunden sein. Mit Hinblick auf Figur 4 ist zu erkennen, dass zwischen dem Datennetzwerk 6 und dem Packet Data Network Gateway 17a noch ein Access-Gateway 18 geschalten ist. Das Access-Gateway 18 hat die Aufgabe sicherzustellen, dass nur die Daten von mobilen Endgeräten 7a, 7b an das Datennetzwerk 6 weitergeleitet werden, die sich gegenüber einen Abrechnungssystem 19 identifiziert haben. Das Access-Gateway 18 kann beispielsweise als passwortgeschützte Webseite ausgeführt sein, wobei der Nutzer das richtige Passwort, welches er beispielsweise an der Rezeption erhält, eingeben muss, damit sein mobiles Endgerät 7a, 7b entsprechend freigeschalten wird. Erst nach einer erfolgreichen Autorisierung durch das Abrechnungssystem 19 werden die Daten von den mobilen Endgeräten 7a, 7b in das Datennetzwerk 6 durchgeleitet. Das Abrechnungssystem 19 kann auch zusätzlich mit einer ersten Authentifikations-/Autorisations-/ und Abrechnungsvorrichtung 20a verbunden sein. Diese Authentifikations-/Autorisations-/ und Abrechnungsvorrichtung 20a kann mit anderen Authentifikations-/Autorisations-/ und Abrechnungsvorrichtungen 20b, 20c (siehe Figur 6) verbunden sein. Die anderen Authentifikations-/Autorisations-/ und Abrechnungsvorrichtungen 20b, 20c können bei Mobilfunkunternehmen installiert sein.

Es ist zu betonen, dass das Access-Gateway in einem LTE-Netzwerk das Packet Data Network Gateway 17a ist. Erfindungsgemäß wird ein zusätzliches Access-Gateway 18 eingesetzt. Dieses kümmert sich jedoch nicht um die LTE-Verbindungen bzw. Teilnehmer, sondern um die Access Points 5a bzw. die mobilen Endgeräte 7a, 7b, die über die Access Points 5a kommunizieren und sich am WiFi-Netzwerk anmelden. Es liegt also eine Kombination einer LTE-Verbindung bestehend aus LTE-RAN (Radio Access Network) und LTE Core Netzwerk und einem WiFi-System vor, wobei die Access Points 5a und das Access-Gateway 18 getrennt sind und der Access-Gateway 18 von einem Betriebsunternehmen gesteuert wird. Die Kommunikation zwischen den (WiFi) Access Points 5a und dem (WiFi) Access-Gateway 18 erfolgt über die Mobilfunkverbindung. Dies ist völlig neu. Die Mobilfunkverbindung besteht, wie bereits erläutert, insbesondere aus der Basisbandeinheit 10a, dem Serving Gateway 16a, dem Packet Data Network Gateway 17a, der Mobility Management Entity (MME) 14a und dem Home Subscriber Server (HSS) 15a. Die Sende- und/oder Empfangseinheit 4 und/oder die Aufbereitungs- und/oder Verteileinrichtung 11 kann auch noch mit dazu gezählt werden.

Gemäß Figur 3 umfassen die mobilen Endgeräte 7a, 7b eine SIM-Karte, auf der entsprechende Nutzerinformationen gespeichert sind. Es wird auf die vorherigen Erläuterungen hierzu verwiesen. Diese Nutzerinformationen können an das Access-Gateway 18 übertragen werden. Dieses leitet diese Informationen weiter an das Abrechnungssystem 19, welches diese wiederum an die erste Authentifikations-/Autorisations-/ und Abrechnungsvorrichtung 20a weiterleitet. Diese kann eine Abrechnung bzw. Verrechnung mit den anderen Authentifikations-/Autorisations-/ und Abrechnungsvorrichtungen 20b, 20c durchführen, die zu dem Mobilfunkanbieter des entsprechenden Teilnehmers gehören. Bei einer positiven Rückmeldung erhält das Access-Gateway 18 die Information, den Datenverkehr in das Datennetz 6 weiterzuleiten. Eine solche Identifizierung kann mittels eines EAP-Verfahrens durchgeführt werden. Hierzu zählen insbesondere das EAP-SIM-Verfahren und das EAP-AKA-Verfahren.

Das Abrechnungssystem 19 und die erste Authentifikations-/Autorisations-/ und Abrechnungsvorrichtung 20a gehören vorzugsweise ebenfalls zur ersten Steuerungseinrichtung 12a. Dies bedeutet, dass diese Vorrichtungen zentral bei einem Betriebsunternehmen installiert sind. Die entsprechende Nutzerverwaltung findet bei diesen Betriebsunternehmen statt.

Die zentralisierte Control Plane (z.B. MME, HSS) verringert den Installations- und Konfigurationsaufwand und ermöglicht den Einsatz einer cloudbasierten Lösung (hohe Verfügbarkeit, Load Balancing). Die Control Plane kann dabei noch mit anderen Basisbandeinheiten in anderen Gebäuden zusammenarbeiten und diese, wie eingangs beschrieben, steuern.

Besonders vorteilhaft ist auch, dass das Access-Gateway 18 mit dem Datennetzwerk 6 am Ort des Gebäudes 2 oder Campus verbunden ist. Dieses sogenannte lokale "Data Breakout" verhindert hohen Datenverkehr bzw. eine hohe Bandbreitenanforderung auf der Verbindung zwischen dem Ort des erbrachten Dienstes, also dem Gebäude 2 und dem Dienstanbieter, also dem Betriebsunternehmen, wo die zentralisierte Control Plane angeordnet ist. In diesem Fall ist es ausreichend eine breitbandige Verbindung in das Datennetz 6 bereit zu stellen und eine schmalbandige Verbindung zu den Betriebsunternehmen. Über die schmalbandige Verbindung werden die Steuerdaten (control plane) übertragen.

Grundsätzlich wäre es auch denkbar, dass alle Daten über eine gemeinsame Verbindung (gemeinsames physikalisches Medium) in das Datennetz übertragen werden. In diesem Fall würden die Steuerdaten vorzugsweise über eine verschlüsselte VPN (engl. virtual private network; dt. virtuelles privates Netzwerk) zu dem Betriebsunternehmen übertragen werden.

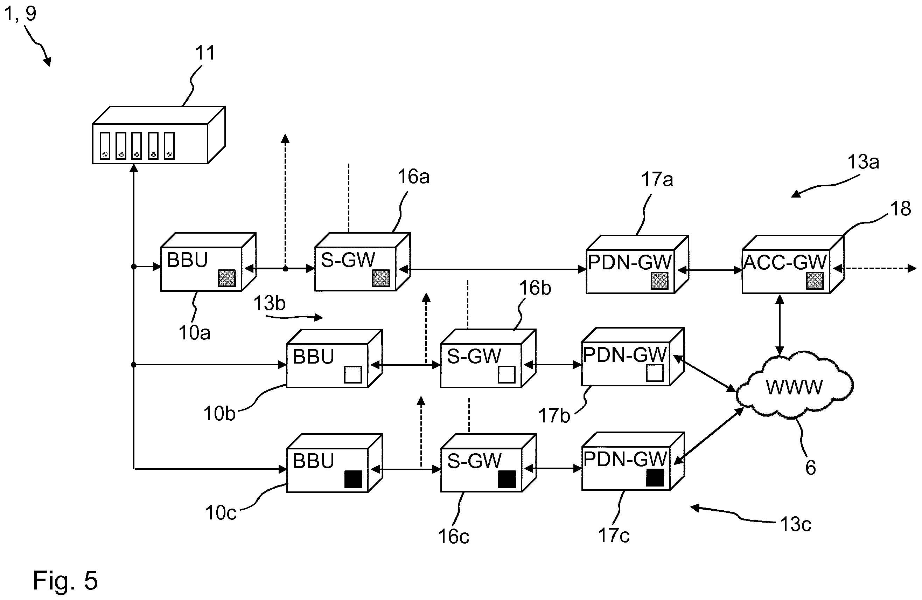

Mit Hinblick auf Figur 5 sind noch eine zweite Basisbandeinheit 10b und zumindest eine weitere (dritte) Basisbandeinheit 10c gezeigt. Alle Basisbandeinheiten 10a, 10b, 10c sind mit der Aufbereitungs- und/oder Verteileinrichtung 11 verbunden. Jede Basisbandeinheit 10a, 10b, 10c erzeugt Signale, die die unterschiedlichen Mobilfunkzellen 1a, 1b, 1c bilden, bzw. über diese abgestrahlt werden. Die zweite Basisbandeinheit 10b ist mit einer zweiten Gateway-Einrichtung 13b verbunden. Die zumindest eine weitere Basisbandeinheit 10c ist mit zumindest einer weiteren Gateway-Einrichtung 13c verbunden. Über die zweite Gateway-Einrichtung 13b bzw. die zumindest eine weitere Gateway-Einrichtung 13c sind die zweite Basisbandeinheit 10b bzw. die zumindest eine weitere Basisbandeinheit 10c mit dem Datennetzwerk 6 verbindbar oder verbunden. Die zweite bzw. die zumindest eine weitere Basisbandeinheit 10b, 10c sind ebenfalls wiederum über die Aufbereitungs- und/oder Verteileinrichtung 11 mit der zumindest einen Sende- und/oder Empfangseinheit 4 verbunden (indirekte Verbindung). Eine direkte Verbindung wäre ebenfalls möglich. Die Aufbereitungs- und/oder Verteileinrichtung 11 kann eine oder mehrere Antennen aufweisen. Jede Mobilfunkzelle 1a, 1b, 1c kann über eine eigene Antenne bereitgestellt werden. Die Mobilfunkzellen 1a, 1b, 1c können auch über eine gemeinsame Antenne bereitgestellt werden, die entsprechend breitbandig ausgelegt ist.

Mit Hinblick auf Figur 3 sind weitere Teilnehmergeräte 5b, 5c in Form von weiteren mobilen Endgeräten 5b, 5c zu erkennen, die eine Mobilfunkverbindung mit der Sende- und/oder Empfangseinheit 4 über die zweite bzw. die zumindest eine weitere Mobilfunkzelle 1b, 1c herstellen. Die Daten, die das weitere mobile Endgerät 5b an die Sende- und/oder Empfangseinheit 4 übermittelt, werden von dieser an die zweite Basisbandeinheit 10b weitergeleitet. Die zweite Basisbandeinheit 10b leitet diese wiederum an das Datennetzwerk 6 über die zweite Gateway-Einrichtung 13b weiter. Das Teilnehmergerät 5c, also das weitere mobile Endgerät 5c, überträgt seine Daten über die zumindest eine weitere Mobilfunkzelle 1c an die Sende- und/oder Empfangseinheit 4. Diese leitet die Daten an die zumindest eine weitere Basisbandeinheit 10c weiter. Die zumindest eine weitere Basisbandeinheit 10c überträgt diese Daten über die zumindest eine weitere Gateway-Einrichtung 13c an das Datennetzwerk 6.

Die zweite Basisbandeinheit 10b und die zumindest eine weitere Basisbandeinheit 10c werden vorzugsweise von anderen Unternehmen betrieben, als die erste Basisbandeinheit 10a.

Die zweite und/oder die zumindest eine weitere Basisbandeinheit 10b, 10c und die zweite und/oder die zumindest eine weitere Gateway-Einrichtung 13b, 13c sind in dem Gebäude 2 oder Campus installiert, in dem die zumindest eine Sende- und/oder Empfangseinheit 4 die Vielzahl von Mobilfunkzellen 1a, 1b, 1c bereitstellt. Die zweite und/oder die zumindest eine weitere Gateway-Einrichtung 13b, 13c umfassen ein zweites und/oder zumindest ein weiteres Serving Gateway 16b, 16c und ein zweites und/oder zumindest eine weiteres Packet Data Network Gateway 17b, 17c. Das zweite und/oder das zumindest eine weitere Packet Data Network Gateway 17b, 17c sind direkt mit dem Datennetzwerk 6 verbunden oder verbindbar. Ein Access Gateway 18, wie in Figur 5 in der ersten Gateway-Einrichtung 13a dargestellt, ist in diesem Fall vorzugsweise nicht dazwischen geschaltet.

Der Aufbau des zweiten und des zumindest einen weiteren Serving Gateway 16b, 16c und des Packet Data Network Gateway 17b, 17c entspricht dem Aufbau des ersten Serving Gateways 16a und des ersten Packet Data Network Gateways 17b, wie diese bereits beschrieben worden sind, worauf hiermit Bezug genommen wird.

Vorzugsweise sind das Access Gateway 18 und das zweite und/oder das zumindest eine weitere Packet Data Network Gateway 17b, 17c über dieselbe Datenverbindung mit dem Datennetzwerk 6 verbunden. Dadurch können weitere Kosten eingespart werden.

Gestrichelt dargestellt sind in Figur 5 noch die Verbindungen zu den jeweiligen Control Planes 12a, 12b und 12c. Über diese Verbindungen wird, wie bereits erläutert, der Zugriff auf die Gateway-Einrichtungen 13a, 13b, 13c reglementiert und die Basisbandeinheiten 10a, 10b, 10c entsprechend gesteuert.

Figur 6 zeigt die zusätzlichen Control Planes 12a, 12b, 13b, die in Figur 5 lediglich gestrichelt angedeutet sind.

Mit Hinblick auf die Figur 4 wurde bereits die erste Mobility Management Entity 14a, der erste Home Subscriber Server 15a, die erste Authentifikations-/Autorisations-/ und Abrechnungsvorrichtung 20a und das Abrechnungssystem 19 erläutert. Diese Gegenstände befinden sich zentral bei dem Betriebsunternehmen, welches die WLAN-Verbindungen 8a, 8b in dem Gebäude 2 oder Campus betreibt. Daher sind diese Gegenstände gestrichelt dargestellt.

Das Mobilfunkübertragungssystem 1 umfasst in der zweiten und/oder in der zumindest einen weiteren Steuerungseinrichtung 12b, 12c eine zweite und/oder zumindest eine weitere Mobility Management Entity (MME) 14b, 14c und einen zweiten und/oder zumindest einen weiteren Home Subscriber Server (HSS) 15b, 15c. Weiterhin sind vorzugsweise eine zweite und/oder zumindest eine weitere Authentifikations-/Autorisations-/ und Abrechnungsvorrichtung 20b, 20c ausgebildet. Besonders vorteilhaft ist, dass die zweite und/oder die zumindest eine weitere Authentifikations-/Autorisations-/ und Abrechnungsvorrichtungen 20b, 20c von der ersten Authentifikations-/Autorisations-/ und Abrechnungsvorrichtung 20a aus zugänglich sind. Die zweite und die zumindest eine weitere Authentifikations-/Autorisations-/ und Abrechnungsvorrichtung 20b, 20c müssen untereinander nicht zum Datenaustausch miteinander verbunden sein. Die Authentifikations-/Autorisations-/ und Abrechnungsvorrichtungen 20a, 20b, 20c sind dabei zentral, also bei den jeweiligen Betriebsunternehmen (beispielsweise Mobilfunkunternehmen) untergebracht und werden dort verwaltet. Dadurch wird der Installationsaufwand innerhalb des Gebäudes 2 oder Campus gering gehalten.

Bezüglich der Funktionsweise der zweiten bzw. der zumindest einen weiteren MME 14b, 14c und des zweiten bzw. des zumindest einen weiteren HSS 15b, 15c und der zweiten bzw. der weiteren Authentifikations-/Autorisations-/ und Abrechnungsvorrichtung 20b, 20c, wird auf die Erläuterungen zu der ersten MME 14a, des ersten HSS 15a und der ersten Authentifikations-/Autorisations-/ und Abrechnungsvorrichtung 20a verwiesen.

Grundsätzlich können die erste MME 14A und der erste HSS 15a auch bei verschiedenen Betriebsunternehmen untergebracht sein. Das gleiche gilt auch für die zweite MME 14b und den zweiten HSS 15b und für die zumindest eine weitere MME 15c und den zumindest einen weiteren HSS 15c.

Vorzugsweise sind alle Gateway-Einrichtungen (13a, 13b, 13c) über dieselbe Verbindung mit dem Datennetzwerk verbunden. Über diese Verbindung könnten auch alle Steuerungs-Einrichtungen (12a, 12b, 12c) mit den jeweiligen Basisbandeinheiten (10a, 10b, 10c) verbunden sein, wobei es sich hierbei um eine verschlüsselte Verbindung handelt. Vorzugsweise sind die Steuerungs-Einrichtungen (12a, 12b, 12c) allerdings über eine separate Verbindung mit den jeweiligen Basisbandeinheiten (10a, 10b, 10c) verbunden. Die separate Verbindung würde dabei vorzugsweise entweder unter Nutzung eines anderen physikalischen Mediums oder unter Nutzung einer anderen logischen Verbindung, z.B. auf IP-Ebene erfolgen. Weiter vorzugsweise ist jede Steuerungs-Einrichtung (12a, 12b, 12c) über eine eigene (physikalische) Verbindung mit ihrer jeweiligen Basisbandeinheit (10a, 10b, 10c) verbunden. Ein weiteres mobiles Endgerät 5b, welches Daten mit der zumindest einen Sende- und/oder Empfangseinheit 4 auf der zweiten Mobilfunkzelle 1b austauscht, wird bei entsprechend vorliegender Berechtigung durch die zweite MME 14b der Zugriff auf die zweite Gateway-Einrichtung 13b erlaubt. Das zweite Packet Data Network Gateway 17b leitet die entsprechenden Datenpakete dann an das Datennetzwerk 6 weiter.

Gleiches gilt auch für das zumindest eine weitere mobile Endgerät 5c, welches über die zumindest eine weitere Mobilfunkzelle 1c in Kommunikationsverbindung mit der zumindest einen Sende- und/oder Empfangseinheit 4 steht. Die Daten werden über die zumindest eine weitere Basisbandeinheit 10c an die zumindest eine weitere Gateway-Einrichtung 13c und über diese in das Datennetzwerk 6 geleitet. Dies gilt ebenfalls nur bei einer ausreichenden Autorisation, die durch die zumindest eine weitere MME 14c geprüft wird. Diese steuert dann entsprechend das zumindest eine weitere Serving Gateway 16c an.

Grundsätzlich ist es möglich, dass eine Vielzahl von weiteren Sende- und/oder Empfangseinheiten mit der Aufbereitungs- und/oder Verteileinrichtung 11 verbunden sind, von denen jedes wiederum eine Vielzahl von Mobilfunkzellen 1a, 1b, 1c bereitstellt. Die Basisbandeinheiten 10a, 10b, 10c können auch direkt mit der Vielzahl von den weiteren Sende- und/oder Empfangseinheiten verbunden sein. Die Mobilfunkzellen 1a, 1b, 1c sind vorzugsweise unabhängig voneinander, weil die Basisbandeinheiten 10a, 10b, 10c mit voneinander unabhängigen Core-Netzwerk-Komponenten verbunden sind. D.h. es werden mehrere (parallele) voneinander unabhängige Mobilfunknetzwerke bereitgestellt.

Die jeweiligen Gateway-Einrichtungen 13a, 13b, 13c können zusammen mit der dazugehörigen Basisbandeinheit 10a, 10b, 10c in einem gemeinsamen Gerät ausgebildet sein. Dieses gemeinsame Gerät kann dann noch zusätzlich als Modul in die Aufbereitungs- und/oder Verteileinrichtung 11 eingeschoben werden bzw. Bestandteil von dieser sein.

Grundsätzlich können die einzelnen Mobilfunkzellen 1a, 1b, 1c innerhalb des Gebäudes 2 oder Campus mit unterschiedlichen Leistungen betrieben werden. Dadurch ist die räumliche Ausdehnung der einzelnen Mobilfunkzellen 1a, 1b, 1c individuell einstellbar.

Die jeweiligen Gateway-Einrichtungen 13a, 13b, 13c stellen dabei insbesondere eine Kombination der Gateways eines LTE-Netzwerks und des Gateways eines WiFi-Systems dar.

Im Weiteren werden nochmals gesondert einige erfindungsgemäße Weiterbildungen des Mobilfunkübertragungssystem 1 hervorgehoben.

Ein Vorteil des Mobilfunkübertragungssystem 1 besteht, wenn:
- die Mobilfunkzellen 1a, 1b, 1c als Mikrozellen ausgebildet sind und einen Bereich mit einem Durchmesser von weniger als 50 Metern, vorzugsweise von weniger als 40 Metern und weiter vorzugsweise von weniger als 30 Metern abdecken.

Außerdem besteht ein Vorteil des Mobilfunkübertragungssystem 1, wenn:
- die erste Steuerungs-Einrichtung 12a Teil der Control Plane (dt. Steuerungsschicht) ist; und/oder
- die erste Gateway-Einrichtung 13a und die erste Basisbandeinheit 10a Teil der User Plane (dt. Nutzerschicht) sind.

Zudem besteht ein Vorteil des Mobilfunkübertragungssystem 1, wenn:
- die Aufbereitungs- und/oder Verteileinrichtung 11 dazu ausgebildet ist, eine Frequenzumsetzung und Signalverstärkung von denjenigen Signalen durchzuführen, die von den Basisbandeinheiten 10a, 10b, 10c in Richtung der zumindest einen Sende- und/oder Empfangseinheit 4 übertragen werden sollen; und/oder
- die Aufbereitungs- und/oder Verteileinrichtung 11 dazu ausgebildet ist, eine Frequenzumsetzung und Signalverstärkung von denjenigen Signalen durchzuführen, die von der zumindest einen Sende- und/oder Empfangseinheit 4 in Richtung der Basisbandeinheiten 10a, 10b, 10c übertragen werden sollen.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Mobilfunkübertragungssystem (1) mit zumindest einer Mobilfunkzelle (1a, 1b, 1c) in einem Gebäude (2) oder Campus, wobei ein Campus mehrere benachbarte und/oder zusammenhängende Gebäudekomplexe umfasst, mit den folgenden Merkmalen:
- eine erste Basisbandeinheit (10a) und eine erste Gateway-Einrichtung (13a), wobei die erste Basisbandeinheit (10a) über die erste Gateway-Einrichtung (13a) mit einem Datennetzwerk (6), insbesondere dem Internet verbindbar ist oder verbunden ist;
- zumindest eine Sende- und/oder Empfangseinheit (4), die mit der ersten Basisbandeinheit (10a) direkt oder indirekt verbunden ist;
- die zumindest eine Sende- und/oder Empfangseinheit (4) ist dazu ausgebildet, um zumindest eine erste Mobilfunkzelle (1a) bereit zu stellen, um über diese erste Mobilfunkzelle (1a) Informationen über eine Mobilfunkverbindung mit zumindest einem gebäudeinnenseitigen oder im Campus befindlichen Teilnehmergerät (5a, 5b, 5c) auszutauschen, wobei über diese Mobilfunkverbindung eine Datenverbindung zwischen dem zumindest einen Teilnehmergerät (5a, 5b, 5c) und dem Datennetzwerk (6) über die erste Basisbandeinheit (10a) herstellbar oder hergestellt ist;
- eine erste Steuerungs-Einrichtung (12a), die mit der ersten Basisbandeinheit (10a) und der ersten Gateway-Einrichtung (13a) verbunden ist;
- die erste Basisbandeinheit (10a) und die erste Gateway-Einrichtung (13a) sind in dem Gebäude (2) oder Campus installiert, in dem die zumindest eine Sende- und/oder Empfangseinheit (4) die zumindest eine erste Mobilfunkzelle (1a) bereitstellt;
- die erste Steuerungs-Einrichtung (12a) ist vom Standort der ersten Basisbandeinheit (10a), der zumindest einen Sende- und/oder Empfangseinheit (4) und der ersten Gateway-Einrichtung (13a) entfernt, also außerhalb des Gebäudes (2) oder Campus, bei einem Betriebsunternehmen untergebracht;
**gekennzeichnet durch** die folgenden Merkmale:
- bei der zumindest einen Mobilfunkzelle (1a, 1b, 1c) handelt es sich um eine LTE-Funkzelle und/oder um LTE-A Funkzelle und/oder um LTE Advanced Pro Funkzelle;
- die erste Steuerungs-Einrichtung (12a) umfasst eine erste Mobility Management Entity (14a) und einen ersten Home Subscriber Server (15a); und
die erste Gateway-Einrichtung (13a) umfasst ein erstes Serving Gateway (16a) und erstes Packet Data Network Gateway (17a) und ein Access-Gateway (18), wobei das Access-Gateway (18) dazu ausgebildet ist, das Packet Data Network Gateway (17a) mit dem Datennetzwerk (6) zu verbinden;
- die erste Steuerungs-Einrichtung (12a) umfasst ein Abrechnungssystem (19) und eine erste Authentifikations-/Autorisations-/ und Abrechnungsvorrichtung (20a), wobei das Abrechnungssystem (19) mit dem Access-Gateway (18) und mit der ersten Authentifikations-/Autorisations-/ und Abrechnungsvorrichtung (20a) verbunden ist;
- bei dem zumindest einen Teilnehmergerät (5a) handelt es sich um zumindest einen Access Point (5a) ;
- der zumindest eine Access Point (5a) ist dazu ausgebildet über die erste Mobilfunkzelle (1a) mit der zumindest einen Sende- und/oder Empfangseinheit (4) zu kommunizieren;
- der zumindest eine Access Point (5a) ist dazu ausgebildet eine WLAN-Verbindung (8a, 8b) für zumindest ein mobiles Endgerät (7a, 7b) zu Verfügung zu stellen;
- das Abrechnungssystem (19) ist dazu ausgebildet, das Access-Gateway (18) dahingehend zu steuern, dass das zumindest eine mobile Endgerät (7a, 7b) Daten über die WLAN-Verbindung des zumindest einen Access Points (5a) und die Mobilfunkverbindung der ersten Mobilfunkzelle (1a) über die erste Basisbandeinheit (10a) und das erste Serving Gateway (16a) und das erste Packet Data Network Gateway (17a) und das Access-Gateway (18) in das Datennetzwerk (6) übertragen kann.

2. Mobilfunkübertragungssystem (1) nach Anspruch 1, **gekennzeichnet durch** das folgende Merkmal:
- die erste Authentifikations-/Autorisations-/ und Abrechnungsvorrichtung (20a) ist mit zumindest einer weiteren Authentifikations-/Autorisations-/ und Abrechnungsvorrichtung (20b, 20c) verbindbar, die von einem anderen Betriebsunternehmen betrieben wird.

3. Mobilfunkübertragungssystem (1) nach einem der vorherigen Ansprüche, **gekennzeichnet durch** die folgenden Merkmale:
- die Anbindung des Access-Gateways (18) an das Datennetzwerk (6) erfolgt über dieselbe Verbindung über die die erste Mobility Management Entity (14a) an die erste Basisbandeinheit (10a) angebunden ist; oder
die Anbindung des Access Gateways (18) an das Datennetzwerk (6) erfolgt über eine andere Verbindung als diejenige Verbindung, über die die erste Mobility Management Entity (14a) mit der ersten Basisbandeinheit (10a) verbunden ist.

4. Mobilfunkübertragungssystem (1) nach einem der vorherigen Ansprüche, **gekennzeichnet durch** das folgende Merkmal:
- die erste Mobility Management Entity (14a) ist zusammen mit dem ersten Home Subscriber Server (15a) dazu ausgebildet einen Zugriff des zumindest einen Access Points (5a) über die erste Mobilfunkzelle (1a) und die erste Basisbandeinheit (10a) und das erste Serving Gateway (16a) und das erste Packet Data Network Gateway (17a) hin zum Access-Gateway (18) zu autorisieren.

5. Mobilfunkübertragungssystem (1) nach einem der vorherigen Ansprüche, **gekennzeichnet durch** die folgenden Merkmale:
- das Abrechnungssystem (19) ist dazu ausgebildet, eine Autorisierung, ob das zumindest eine mobile Endgerät (7a, 7b) Daten in das Datennetzwerk (6) übertragen darf, mittels eines EAP-Verfahrens, insbesondere dem EAP-SIM-Verfahren oder dem EAP-AKA-Verfahren durchzuführen; und/oder
- das Abrechnungssystem (19) ist dazu ausgebildet, die Autorisierung mittels einer Passwort-Abfrage durchzuführen.

6. Mobilfunkübertragungssystem (1) nach einem der vorherigen Ansprüche, **gekennzeichnet durch** die folgenden Merkmale:
- es sind eine zweite und/oder zumindest eine weitere Basisbandeinheit (10b, 10c) und eine zweite und/oder zumindest eine weitere Gateway-Einrichtung (13b, 13c) vorgesehen, wobei die zweite und/oder die zumindest eine weitere Basisbandeinheit (10b, 10c) über die zweite und/oder die zumindest eine weitere Gateway-Einrichtung (13b, 13c) mit dem Datennetzwerk (6) verbindbar sind oder verbunden sind;
- die zweite und/oder die zumindest eine weitere Basisbandeinheit (10b, 10c) sind direkt oder indirekt mit der zumindest einen Sende- und/oder Empfangseinheit (4) verbunden;
- die zumindest eine Sende- und/oder Empfangseinheit (4) ist dazu ausgebildet eine zweite und/oder zumindest eine weitere Mobilfunkzelle (1b, 1c) bereit zu stellen, um über diese zweite und/oder zumindest eine weitere Mobilfunkzelle (1b, 1c) Informationen über eine Mobilfunkverbindung mit weiteren gebäudeinnenseitigen oder im Campus befindlichen Teilnehmergeräten (5b, 5c) auszutauschen, wobei über diese Mobilfunkverbindungen eine Datenverbindung zwischen den weiteren Teilnehmergeräten (5b, 5c) und dem Datennetzwerk (6) über die zweite und/oder die zumindest eine weitere Basisbandeinheit (10b, 10c) herstellbar oder hergestellt ist;
- eine zweite und/oder zumindest eine weitere Steuerungs-Einrichtung (12b, 12c), die mit der zweiten und/oder der zumindest einen weiteren Basisbandeinheit (10b, 10c) und der zweiten und/oder der zumindest einen weiteren Gateway-Einrichtung (13b, 13c) verbunden ist;
- die zweite und/oder die zumindest eine weitere Basisbandeinheit (10b, 10c) und die zweite und/oder die zumindest eine weitere Gateway-Einrichtung (13b, 13c) sind in dem Gebäude (2) oder Campus installiert, in dem die zumindest eine Sende- und/oder Empfangseinheit (4) die zumindest eine Mobilfunkzelle (1a, 1b, 1c) bereitstellt;
- die zweite und/oder die zumindest eine weitere Steuerungs-Einrichtung (12b, 12c) sind vom Standort der zweiten und/oder der zumindest einen weiteren Basisbandeinheit (10b, 10c), der zumindest einen Sende- und/oder Empfangseinheit (4) und der zweiten und/oder zumindest einen weiteren Gateway-Einrichtung (13b, 13c) entfernt bei dem gleichen Betriebsunternehmen wie die erste Steuerungs-Einrichtung (12a) oder bei zumindest einem weiteren Betriebsunternehmen untergebracht.

7. Mobilfunkübertragungssystem (1) nach Anspruch 6, **gekennzeichnet durch** das folgende Merkmal:
- die zumindest eine Sende- und/oder Empfangseinheit (4) ist dazu ausgebildet, die zweite und/oder die zumindest eine weitere Mobilfunkzelle (1b, 1c) in einem Frequenzbereich zu betreiben, der zumindest einem Mobilfunkunternehmen zugewiesen ist, welches Mobilfunkdienstleistungen außerhalb des Gebäudes (2) oder Campus betreibt; und/oder
- die zumindest eine Sende- und/oder Empfangseinheit (4) ist dazu ausgebildet, die erste Mobilfunkzelle (1a) in einem Frequenzbereich zu betreiben, der von Mobilfunkunternehmen, die Mobilfunkdienstleistungen außerhalb des Gebäudes (2) oder Campus betreiben, ungenutzt ist; oder
die zumindest eine Sende- und/oder Empfangseinheit (4) ist dazu ausgebildet, die erste Mobilfunkzelle (1a) in einem Frequenzbereich zu betreiben, der zumindest einem Mobilfunkunternehmen zugewiesen ist, welches Mobilfunkdienstleistungen außerhalb des Gebäudes (2) oder Campus betreibt.

8. Mobilfunkübertragungssystem (1) nach einem der Ansprüche 6 oder 7, **gekennzeichnet durch** die folgenden Merkmale:
- die zweite und/oder die zumindest eine weitere Steuerungs-Einrichtung (12b, 12c) umfassen eine zweite und/oder zumindest eine weitere Mobility Management Entity (14b, 14c) und einen zweiten und/oder zumindest einen weiteren Home Subscriber Server (15b, 15c);
- die zweite und/oder die zumindest eine weitere Steuerungs-Einrichtung (12b, 12c) umfassen eine zweite und/oder zumindest eine weitere Authentifikations-/Autorisations-/ und Abrechnungsvorrichtung (20b, 20c) ;
- die zweite und/oder die zumindest eine weitere Authentifikations-/Autorisations-/ und Abrechnungsvorrichtungen (20b, 20c) sind von der ersten Authentifikations-/Autorisations-/ und Abrechnungsvorrichtung (20a) aus zugänglich.

9. Mobilfunkübertragungssystem (1) nach einem der Ansprüche 6 bis 8, **gekennzeichnet durch** die folgenden Merkmale:
- die zweite und/oder die zumindest eine weitere Gateway-Einrichtung (13b, 13c) umfassen ein zweites und/oder zumindest ein weiteres Serving Gateway (16b, 16c) und ein zweites und/oder zumindest ein weiteres Packet Data Network Gateway (17b, 17c);
- das zweite und/oder das zumindest eine weitere Packet Data Network Gateway (17b, 17c) sind mit dem Datennetzwerk (6) verbunden oder verbindbar.

10. Mobilfunkübertragungssystem (1) nach den Ansprüchen 8 und 9, **gekennzeichnet durch** die folgenden Merkmale:
- die Anbindung des zweiten Packet Data Network Gateways (17b) an das Datennetzwerk (6) erfolgt über dieselbe Verbindung über die die zweite Mobility Management Entity (14b) an die zweite Basisbandeinheit (10b) angebunden ist; oder
die Anbindung des zweiten Packet Data Network Gateways (17b) an das Datennetzwerk (6) erfolgt über eine andere Verbindung als diejenige Verbindung, über die die zweite Mobility Management Entity (14b) mit der zweiten Basisbandeinheit (10b) verbunden ist;
und/oder
- die Anbindung des zumindest einen weiteren Packet Data Network Gateways (17c) an das Datennetzwerk (6) erfolgt über dieselbe Verbindung über die die zumindest eine weitere Mobility Management Entity (14c) an die zumindest eine weitere Basisbandeinheit (10c) angebunden ist; oder
die Anbindung des zumindest einen weiteren Packet Data Network Gateways (17c) an das Datennetzwerk (6) erfolgt über eine andere Verbindung als diejenige Verbindung, über die die zumindest eine weitere Mobility Management Entity (14c) mit der zumindest einen weiteren Basisbandeinheit (10c) verbunden ist.

11. Mobilfunkübertragungssystem (1) nach einem der vorherigen Ansprüche oder nach einem der Ansprüche 6 bis 10, **gekennzeichnet durch** die folgenden Merkmale:
- eine Aufbereitungs- und/oder Verteileinrichtung (11), die mit allen Basisbandeinheiten (10a, 10b, 10c) und der zumindest einen Sende- und/oder Empfangseinheit verbunden (4) ist;
a) die Aufbereitungs- und/oder Verteileinrichtung (11) ist dazu ausgebildet, die von der ersten Basisbandeinheit (10a) erzeugten Signale an die entsprechende zumindest eine Sende- und/oder Empfangseinheit (4) weiterzuleiten;
die Aufbereitungs- und/oder Verteileinrichtung (11) ist dazu ausgebildet, die von der zumindest einen Sende- und/oder Empfangseinheit (4) empfangenen Signale von der ersten Mobilfunkzelle (1a) an die erste Basisbandeinheit (10a) weiterzuleiten;
und/oder
b) die Aufbereitungs- und/oder Verteileinrichtung (11) ist dazu ausgebildet, die von der zweiten und/oder der zumindest einen weiteren Basisbandeinheit (10b, 10c) erzeugten Signale an die entsprechende zumindest eine Sende- und/oder Empfangseinheit (4) weiterzuleiten;
die Aufbereitungs- und/oder Verteileinrichtung (11) ist dazu ausgebildet, die von der zumindest einen Sende- und/oder Empfangseinheit (4) empfangenen Signale von der zweiten und/oder der zumindest einen weiteren Mobilfunkzelle (1b, 1c) an die zweite und/oder an die zumindest eine weitere Basisbandeinheit (10b, 10c) weiterzuleiten.

12. Mobilfunkübertragungssystem (1) nach Anspruch 11, **gekennzeichnet durch** das folgende Merkmal:
- eine Vielzahl von weiteren Sende- und/oder Empfangseinheiten (4) sind mit der Aufbereitungs- und/oder Verteileinrichtung (11) verbunden und dazu ausgebildet eine Vielzahl von Mobilfunkzellen (1a, 1b, 1c) bereit zu stellen.

13. Mobilfunkübertragungssystem (1) nach Anspruch 8, **gekennzeichnet durch** die folgenden Merkmale:
- bei dem zumindest einen Teilnehmergerät (5b, 5c) handelt es sich um zumindest ein weiteres mobiles Endgerät (5b, 5c);
- das zumindest eine weitere mobile Endgerät (5b, 5c) ist dazu ausgebildet, eine Mobilfunkverbindung über die zweite oder die zumindest eine weitere Mobilfunkzelle (1b, 1c) mit der zweiten und/oder der zumindest einen weiteren Basisbandeinheit (10b, 10c) herzustellen;
- die zweite und/oder die zumindest eine weitere Mobility Management Entity (14b, 14c) ist dazu ausgebildet einen Zugriff des zumindest einen weiteren mobilen Endgeräts (5b, 5c) über die zweite und/oder die zumindest eine weitere Mobilfunkzelle (1b, 1c) und die zweite und/oder die zumindest eine weitere Basisbandeinheit (10b, 10c) und das zweite und/oder das zumindest eine weitere Serving Gateway (16b, 16c) und das zweite und/oder das zumindest eine weitere Packet Data Network Gateway (17b, 17c) hin zum Datennetzwerk (6) zu autorisieren.

## Claims

1. Mobile communications transmission system (1) comprising at least one mobile communications cell (1a, 1b, 1c) in a building (2) or campus, wherein a campus comprises a plurality of adjacent and/or associated building complexes, having the following features:
- a first baseband unit (10a) and a first gateway device (13a), the first baseband unit (10a) being connectable or connected via the first gateway device (13a) to a data network (6), in particular the Internet;
- at least one transceiver unit (4) which is directly or indirectly connected to the first baseband unit (10a);
- the at least one transceiver unit (4) is configured to provide at least one first mobile communications cell (1a) so as by way of this first mobile communications cell (1a) to exchange information with at least one subscriber device (5a, 5b, 5c) located internal to the building or in the campus via a mobile communications connection, a data connection between the at least one subscriber device (5a, 5b, 5c) and the data network (6) via the first baseband unit (10a) being established or establishable by way of this mobile communications connection;
- a first control device (12a) which is connected to the first baseband unit (10a) and the first gateway device (13a);
- the first baseband unit (10a) and the first gateway device (13a) are installed in the building (2) or campus in which the at least one transceiver unit (4) provides the at least one first mobile communications cell (1a);
- the first control device (12a) is accommodated remote, therefore outside the building (2) or campus, from the site of the first baseband unit (10a), the at least one transceiver unit (4) and the first gateway device (13a), at an operating company;
**characterised by** the following features:
- the at least one mobile communications cell (1a, 1b, 1c) is a LTE communications cell and/or LTE-A communications cell and/or LTE Advanced Pro communications cell;
- the first control device (12a) comprises a first mobility management entity (14a) and a first home subscriber server (15a); and
the first gateway device (13a) comprises a first serving gateway (16a) and a first packet data network gateway (17a) and an access gateway (18) configured to connect the packet data network gateway (17a) to the data network (6);
- the first control device (12a) comprises an accounting system (19) and a first authentication, authorisation and accounting device (20a), the accounting system (19) being connected to the access gateway (18) and to the first authentication, authorisation and accounting device (20a);
- the at least one subscriber device (5a) is at least one access point (5a);
- the at least one access point (5a) is configured to communicate with the at least one transceiver unit (4) via the first mobile communications cell (1a);
- the at least one access point (5a) is configured to provide a WLAN connection (8a, 8b) for at least one mobile terminal (7a, 7b);
- the accounting system (19) is configured to control the access gateway (18) in such a way that the at least one mobile terminal (7a, 7b) can transmit data to the data network (6) via the WLAN connection of the at least one access point (5a) and the mobile communications connection of the first mobile communications cell (1a) can transmit to the data network via the first baseband unit (10a) and the first serving gateway (16a) and the first packet data network gateway (17a) and the access gateway (18).

2. Mobile communications transmission system (1) according to claim 1, **characterised by** the following feature:
- the first authentication, authorisation and accounting device (20a) is connectable to at least one further authentication, authorisation and accounting device (20b, 20c) operated by another operating company.

3. Mobile communications transmission system (1) according to any of the preceding claims, **characterised by** the following features:
- the access gateway (18) is connected to the data network (6) via the same connection via which the first mobility management entity (14a) is connected to the first baseband unit (10a); or
the access gateway (18) is connected to the data network (6) via a different connection from the connection via which the first mobility management entity (14a) is connected to the first baseband unit (10a).

4. Mobile communications transmission system (1) according to any of the preceding claims, **characterised by** the following feature:
- together with the first home subscriber server (15a), the first mobility management entity (14a) is configured to authorise access of the at least one access point (5a) via the first mobile communications cell (1a) and the first baseband unit (10a) and the first serving gateway (16a) and the first packet data network gateway (17a) to the access gateway (18).

5. Mobile communications transmission system (1) according to any of the preceding claims, **characterised by** the following features:
- the accounting system (19) is configured to provide authorisation by means of an EAP method, in particular the EAP SIM method or the EAP AKA method, as to whether the at least one mobile terminal (7a, 7b) can transmit data to the data network (6); and/or
- the accounting system (19) is configured to provide the authorisation by means of a password query.

6. Mobile communications transmission system (1) according to any of the preceding claims, **characterised by** the following features:
- there are a second and/or at least one further baseband unit (10b, 10c) and a second and/or at least one further gateway device (13b, 13c), the second and/or the at least one further baseband unit (10b, 10c) being connectable or connected to the data network (6) via the second and/or the at least one further gateway device (13b, 13c);
- the second and/or the at least one further baseband unit (10b, 10c) are connected directly or indirectly to the at least one transceiver unit (4);
- the at least one transceiver unit (4) is configured to provide a second and/or at least one further mobile communications cell (1b, 1c) so as by way of this second and/or at least one further mobile communications cell (1b, 1c) to exchange information with further subscriber devices (5b, 5c) located internal to the building or within the campus via a mobile communications connection, a data connection between the further subscriber devices (5b, 5c) and the data network (6) via the second and/or the at least one further baseband unit (10b, 10c) being established or establishable by way of said mobile communications connections;
- a second and/or at least one further control device (12b, 12c) which is connected to the second and/or the at least one further baseband unit (10b, 10c) and the second and/or the at least one further gateway device (13b, 13c);
- the second and/or the at least one further baseband unit (10b, 10c) and the second and/or the at least one further gateway device (13b, 10c) are installed in the building (2) or campus in which the at least one transceiver unit (4) provides the at least one mobile communications cell (1a, 1b, 1c);
- the second and/or the at least one further control device (12b, 12c) are accommodated remote from the site of the second and/or the at least one further baseband unit (10b, 10c), the at least one transceiver unit (4) and the second and/or the at least one further gateway device (13b, 13c), at the same operating company as the first control device (12a) or at at least one further operating company.

7. Mobile communications transmission system (1) according to claim 6, **characterised by** the following feature:
- the at least one transceiver unit (4) is configured to operate the second and/or the at least one further mobile communications cell (1b, 1c) in a frequency range assigned to at least one mobile communications company which offers mobile communications services outside the building (2) or campus; and/or
- the at least one transceiver unit (4) is configured to operate the first mobile communications cell (1a) in a frequency range unused by mobile communications companies which operate mobile communications services outside the building (2) or campus; or
the at least one transceiver unit (4) is configured to operate the first mobile communications cell (1a) in a frequency range assigned to at least one mobile commu-nications company which operates mobile communications services outside the building (2) or campus.

8. Mobile communications transmission system (1) according to any of claims 6 or 7, **characterised by** the following features:
- the second and/or the at least one further control device (12b, 12c) comprise a second and/or at least one further mobility management entity (14b, 14c) and a second and/or at least one further home subscriber server (15b, 15c);
- the second and/or the at least one further control device (12b, 12c) comprise a second and/or at least one further authentication, authorisation and accounting device (20b, 20c);
- the second and/or the at least one further authentication, authorisation and accounting device (20b, 20c) are accessible from the first authentication, authorisation and accounting device (20a).

9. Mobile communications transmission system (1) according to any of claims 6 to 8, **characterised by** the following features:
- the second and/or the at least one further gateway device (13b, 13c) comprise a second and/or at least one further serving gateway (16b, 16c) and a second and/or at least one further packet data network gateway (17b, 17c);
- the second and/or the at least one further packet data network gateway (17b, 17c) are connected or connectable to the data network (6).

10. Mobile communications transmission system (1) according to claims 8 and 9, **characterised by** the following features:
- the second packet data network gateway (17b) is connected to the data network (6) via the same connection via which the second mobility management entity (14b) is connected to the second baseband unit (10b); or
the second packet data network gateway (17b) is connected to the data network (6) via a different connection from the connection via which the second mobility management entity (14b) is connected to the second baseband unit (10b); and/or
- the at least one further packet data network gateway (17c) is connected to the data network (6) via the same connection via which the at least one further mobility management entity (14c) is connected to the at least one further baseband unit (10c); or
the at least one further packet data network gateway (17c) is connected to the data network (6) via a different connection from the connection via which the at least one further mobility management entity (14c) is connected to the at least one further baseband unit (10c) .

11. Mobile communications transmission system (1) according to any of the preceding claims or according to any of claims 6 to 10, **characterised by** the following features:
- a processing and/or distribution device (11) which is connected to all the baseband units (10a, 10b, 10c) and to the at least one transceiver unit (4);
a) the processing and/or distribution device (11) is configured to pass on the signals generated by the first baseband unit (10a) to the corresponding at least one transceiver unit (4);
the processing and/or distribution device (11) is configured to pass on the signals received by the at least one transceiver unit (4) from the first mobile communications cell (1a) to the first baseband unit (10a);
and/or
b) the processing and/or distribution device (11) is configured to pass on the signals generated by the second and/or the at least one further baseband unit (10b, 10c) to the corresponding at least one transceiver unit (4);
the processing and/or distribution device (11) is configured to pass on the signals received by the at least one transceiver unit (4) from the second and/or the at least one further mobile communications cell (1b, 1c) to the second and/or to the at least one further baseband unit (10b, 10c).

12. Mobile communications transmission system (1) according to claim 11, **characterised by** the following feature:
- a multiplicity of further transceiver units (4) are connected to the processing and/or distribution device (11) and are configured to provide a multiplicity of mobile communications cells (1a, 1b, 1c).

13. Mobile communications transmission system (1) according to claim 8, **characterised by** the following features:
- the at least one subscriber device (5b, 5c) is at least one further mobile terminal (5b, 5c);
- the at least one further mobile terminal (5b, 5c) is configured to establish a mobile communications connection with the second and/or the at least one further baseband unit (10b, 10c) via the second or the at least one further mobile communications cell (1b, 1c);
- the second and/or the at least one further mobility management entity (14b, 14c) is configured to authorise access of the at least one further mobile terminal (5b, 5c) via the second and/or the at least one further mobile communications cell (1b, 1c) and the second and/or the at least one further baseband unit (10b, 10c) and the second and/or the at least one further serving gateway (16b, 16c) and the second and/or the at least one further packet data network gateway (17b, 17c) to the data network (6).

## Revendications

1. Système de transmission de téléphonie mobile (1) comprenant au moins une cellule de téléphonie mobile (1a, 1b, 1c) dans un bâtiment (2) ou un campus, dans lequel un campus comprend plusieurs complexes de bâtiments adjacents et/ou d'une seule pièce, présentant les caractéristiques suivantes :
- une première unité de bande de base (10a) et un premier dispositif passerelle (13a), la première unité de bande de base (10a) pouvant être connectée ou étant connectée par l'intermédiaire du premier dispositif passerelle (13a) à un réseau de données (6), en particulier Internet ;
- au moins une unité d'envoi et/ou de réception (4) qui est connectée directement ou indirectement à la première unité de bande de base (10a) ;
- l'au moins une unité d'envoi et/ou de réception (4) est conçue pour fournir au moins une première cellule de téléphonie mobile (1a) pour échanger des informations sur cette première cellule de téléphonie mobile (1a) par l'intermédiaire d'une connexion de téléphonie mobile avec au moins un appareil d'abonné (5a, 5b, 5c) se trouvant sur le côté intérieur du bâtiment ou dans le campus, une connexion de données entre l'au moins un appareil d'abonné (5a, 5b, 5c) et le réseau de données (6) pouvant être créée ou étant créée sur cette connexion de téléphonie mobile (10a) par l'intermédiaire de la première unité de bande de base (10a) ;
- un premier dispositif de commande (12a) qui est connecté à la première unité de bande de base (10a) et au premier dispositif passerelle (13a) ;
- la première unité de bande de base (10a) et le premier dispositif passerelle (13a) sont installés dans le bâtiment (2) ou le campus, dans lequel l'au moins une unité d'envoi et/ou de réception (4) fournit l'au moins une première cellule de téléphonie mobile (1a) ;
- le premier dispositif de commande (12a) est éloigné de l'emplacement de la première unité de bande de base (10a), de l'au moins une unité d'envoi et/ou de réception (4) et du premier dispositif passerelle (13a), donc logé dans une société d'exploitation à l'extérieur du bâtiment (2) ou du campus ;
**caractérisé par** les caractéristiques suivantes :
- concernant l'au moins une cellule de téléphonie mobile (1a, 1b, 1c) il s'agit d'une cellule radio LTE et/ou d'une cellule radio LTE-A et/ou d'une cellule radio LTE-Advanced Pro ;
- le premier dispositif de commande (12a) comprend une première entité de gestion de mobilité (14a) et un premier serveur d'abonné résidentiel (15a) ; et
le premier dispositif passerelle (13a) comprend une première passerelle de serveur (16a) et une première passerelle de réseau de données par paquets (17a) et une passerelle d'accès (18), la passerelle d'accès (18) étant conçue pour relier la passerelle de réseau de données par paquets (17a) au réseau de données (6) ;
- le premier dispositif de commande (12a) comprend un système de facturation (19) et un premier dispositif d'authentification / autorisation / et facturation (20a), le système de facturation (19) étant connecté à la passerelle d'accès (18) et au premier dispositif d'authentification / autorisation / et facturation (20a) ;
- concernant l'au moins un appareil d'abonné (5a) il s'agit d'au moins un point d'accès (5a) ;
- l'au moins un point d'accès (5a) est conçu pour communiquer avec l'au moins une unité d'envoi et/ou de réception (4) par l'intermédiaire de la première cellule de téléphonie mobile (1a) ;
- l'au moins un point d'accès (5a) est conçu pour fournir une connexion WiFi (8a, 8b) pour au moins un terminal mobile (7a, 7b) ;
- le système de facturation (19) est conçu pour commander la passerelle d'accès (18) de manière que l'au moins un terminal mobile (7a, 7b) peut transmettre des données par l'intermédiaire de la connexion WiFi de l'au moins un point d'accès (5a), et la connexion de téléphonie mobile de la première cellule de téléphonie mobile (1a) par l'intermédiaire de la première unité de bande de base (10a) et de la première passerelle de serveur (16a) et de la première passerelle de réseau de données par paquets (17a) et de la passerelle d'accès (18) dans le réseau de données (6).

2. Système de transmission de téléphonie mobile (1) selon la revendication 1, **caractérisé par** les caractéristiques suivantes :
- le premier dispositif d'authentification / autorisation et facturation (20a) peut être connecté à au moins un autre dispositif d'authentification / autorisation et facturation (20b, 20c) qui est exploité par une autre société d'exploitation.

3. Système de transmission de téléphonie mobile (1) selon l'une des revendications précédentes, **caractérisé par** les caractéristiques suivantes :
- la connexion de la passerelle d'accès (18) au réseau de données (6) s'effectue par l'intermédiaire de la même connexion par laquelle la première entité de gestion de mobilité (14a) est connectée à la première unité de bande de base (10a) ; ou
la connexion de la passerelle d'accès (18) au réseau de données (6) s'effectue par l'intermédiaire d'une autre connexion que ladite connexion par laquelle la première entité de gestion de mobilité (14a) est connectée à la première unité de bande de base (10a).

4. Système de transmission de téléphonie mobile (1) selon l'une des revendications précédentes, **caractérisé par** les caractéristiques suivantes :
- la première entité de gestion de mobilité (14a), conjointement avec le premier serveur d'abonné résidentiel (15a), est conçue pour autoriser un accès à la passerelle d'accès (18) de l'au moins un point d'accès (5a) par l'intermédiaire de la première cellule de téléphonie mobile (1a) et de la première unité de bande de base (10a) et de la première passerelle de serveur (16a) et de la première passerelle de réseau de données par paquets (17a).

5. Système de transmission de téléphonie mobile (1) selon l'une des revendications précédentes, **caractérisé par** les caractéristiques suivantes :
- le système de facturation (19) est conçu pour exécuter une autorisation selon laquelle l'au moins un terminal mobile (7a, 7b) est autorisé à transmettre des données dans le réseau de données (6), au moyen d'un procédé EAP, en particulier d'un procédé EAP-SIM ou d'un procédé EAP-AKA ; et/ou
- le système de facturation (19) est conçu pour exécuter l'autorisation au moyen d'une demande de mot de passe.

6. Système de transmission de téléphonie mobile (1) selon l'une des revendications précédentes, **caractérisé par** les caractéristiques suivantes :
- une deuxième et/ou au moins une autre unité de bande de base (10b, 10c) et un deuxième et/ou au moins un autre dispositif passerelle (13b, 13c) sont prévus, la deuxième et/ou l'au moins une autre unité de bande de base (10b, 10c) pouvant être connectées ou étant connectées au réseau de données (6) par l'intermédiaire du deuxième et/ou l'au moins un autre dispositif passerelle (13b, 13c) ;
- la deuxième et/ou l'au moins une autre unité de bande de base (10b, 10c) sont directement ou indirectement connectées à l'au moins une unité d'envoi et/ou de réception (4) ;
- l'au moins une unité d'envoi et/ou de réception (4) est conçue pour fournir une deuxième et/ou au moins une autre cellule de téléphonie mobile (1b, 1c) afin d'échanger des informations sur ladite deuxième et/ou l'au moins une autre cellule de téléphonie mobile (1b, 1c) par l'intermédiaire d'une connexion de téléphonie mobile avec d'autres appareils d'abonné (5b, 5c) se trouvant sur le côté intérieur du bâtiment ou dans le campus, une connexion de données entre les autres appareils d'abonné (5b, 5c) et le réseau de données (6) pouvant être créée ou étant créée par l'intermédiaire de la deuxième et/ou de l'au moins une autre unité de bande de base (10b, 10c) sur ces connexions de téléphonie mobile ;
- un deuxième et/ou au moins un autre dispositif de commande (12b, 12c) qui est connecté à la deuxième et/ou l'au moins une autre unité de bande de base (10b, 10c) et au deuxième et/ou à l'au moins un autre dispositif passerelle (13b, 13c) ;
- la deuxième et/ou l'au moins une autre unité de bande de base (10b, 10c) et le deuxième et/ou l'au moins un autre dispositif passerelle (13b, 13c) sont installés dans le bâtiment (2) ou le campus, dans lequel l'au moins une unité d'envoi et/ou de réception (4) fournit l'au moins une cellule de téléphonie mobile (1a, 1b, 1c) ;
- le deuxième et/ou l'au moins un autre dispositif de commande (12b, 12c) sont logés dans la même société d'exploitation que le premier dispositif de commande (12a) ou dans au moins une autre société d'exploitation, loin de l'emplacement de la deuxième et/ou l'au moins une autre unité de bande de base (10b, 10c), de l'au moins une unité d'envoi et/ou de réception (4) et du deuxième et/ou l'au moins un autre dispositif passerelle (13b, 13c).

7. Système de transmission de téléphonie mobile (1) selon la revendication 6, **caractérisé par** la caractéristique suivante :
- l'au moins une unité d'envoi et/ou de réception (4) est conçue pour exploiter la deuxième et/ou l'au moins une autre cellule de téléphonie mobile (1b, 1c) dans un domaine fréquentiel qui est affecté à au moins une société de de téléphonie mobile, laquelle fournit des services de téléphonie mobile à l'extérieur du bâtiment (2) ou du campus ; et/ou
- l'au moins une unité d'envoi et/ou de réception (4) est conçue pour exploiter la première cellule de de téléphonie mobile (1a) dans un domaine fréquentiel qui n'est pas utilisé par les sociétés de téléphonie mobile qui fournissent des services de téléphonie mobile à l'extérieur du bâtiment (2) ou du campus ; ou
l'au moins une unité d'envoi et/ou de réception (4) est conçue pour exploiter la première cellule de de téléphonie mobile (1a) dans un domaine fréquentiel qui est affecté à au moins une société de téléphonie mobile, laquelle fournit des services de téléphonie mobile à l'extérieur du bâtiment (2) ou du campus.

8. Système de transmission de téléphonie mobile (1) selon l'une des revendications 6 ou 7, **caractérisé par** les caractéristiques suivantes :
- le deuxième et/ou l'au moins un autre dispositif de commande (12b, 12c) comprennent une deuxième et/ou au moins une autre entité de gestion de mobilité (14b, 14c) et un deuxième et/ou au moins un autre serveur d'abonné résidentiel (15b, 15c) ;
- le deuxième et/ou l'au moins un autre dispositif de commande (12b, 12c) comprennent un deuxième et/ou au moins un autre dispositif d'authentification / autorisation / facturation (20b, 20c) ;
- le deuxième et/ou l'au moins un autre dispositif d'authentification / autorisation / facturation (20b, 20c) sont accessibles depuis le premier dispositif d'authentification / autorisation / facturation (20a).

9. Système de transmission de téléphonie mobile (1) selon l'une des revendications 6 à 8, **caractérisé par** les caractéristiques suivantes :
- le deuxième et/ou l'au moins un autre dispositif passerelle (13b, 13c) comprennent une deuxième et/ou au moins une autre passerelle de serveur (16b, 16c) et une deuxième et/ou au moins une autre passerelle de réseau de données par paquets (17b, 17c) ;
- la deuxième et/ou l'au moins une autre passerelle de réseau de données par paquets (17b, 17c) sont connectées ou peuvent être connectées au réseau de données (6).

10. Système de transmission de téléphonie mobile (1) selon les revendications 8 et 9, **caractérisé par** les caractéristiques suivantes :
- la connexion de la deuxième passerelle de réseau de données par paquets (17b) au réseau de données (6) est effectuée par la même connexion par laquelle la deuxième entité de gestion de mobilité (14b) est connectée à la deuxième unité de bande de base (10b) ; ou
la connexion de la deuxième passerelle de réseau de données par paquets (17b) au réseau de données (6) est effectuée par une autre connexion que ladite connexion par laquelle la deuxième entité de gestion de mobilité (14b) est connectée à la deuxième unité de bande de base (10b) ; et/ou
- la connexion de l'au moins une autre passerelle de réseau de données par paquets (17c) au réseau de données (6) est effectuée par la même connexion par laquelle l'au moins une autre entité de gestion de mobilité (14c) est connectée à l'au moins une autre unité de bande de base (10c) ; ou
la connexion de l'au moins une autre passerelle de réseau de données par paquets (17c) au réseau de données (6) est effectuée par une autre connexion que ladite connexion par laquelle l'au moins une autre entité de gestion de mobilité (14c) est connectée à l'au moins une autre unité de bande de base (10c).

11. Système de transmission de téléphonie mobile (1) selon l'une des revendications précédentes ou selon l'une des revendications 6 à 10, **caractérisé par** les caractéristiques suivantes :
- un dispositif de traitement et/ou de répartition (11) qui est connecté à toutes les unités de bande de base (10a, 10b, 10c) et à l'au moins une unité d'envoi et/ou de réception (4) ;
a) le dispositif de traitement et/ou de répartition (11) est conçu pour transférer les signaux produits par la première unité de bande de base (10a) à l'au moins une unité d'envoi et/ou de réception (4) correspondante ;
le dispositif de traitement et/ou de répartition (11) est conçu pour transférer les signaux reçus par l'au moins une unité d'envoi et/ou de réception (4) de la première cellule de téléphonie mobile (1a) à la première unité de bande de base (10a) ;
et/ou
b) le dispositif de traitement et/ou de répartition (11) est conçu pour transférer les signaux produits par la deuxième et/ou l'au moins une autre unité de bande de base (10b, 10c) à l'au moins une unité d'envoi et/ou de réception (4) correspondante ;
le dispositif de traitement et/ou de répartition (11) est conçu pour transférer les signaux reçus par l'au moins une unité d'envoi et/ou de réception (4) de la deuxième et/ou l'au moins une autre cellule de téléphonie mobile (1b, 1c) à la deuxième et/ou l'au moins une autre unité de bande de base (10b, 10c).

12. Système de transmission de téléphonie mobile (1) selon la revendication 11, **caractérisé par** la caractéristique suivante :
- une pluralité d'autres unités d'envoi et/ou de réception (4) sont connectées au dispositif de traitement et/ou de répartition (11) et sont conçues pour fournir une pluralité de cellules de de téléphonie mobile (1a, 1b, 1c).

13. Système de transmission de téléphonie mobile (1) selon la revendication 8, **caractérisé par** les caractéristiques suivantes :
- concernant l'au moins un appareil d'abonné (5b, 5c) il s'agit d'au moins un autre terminal mobile (5b, 5c) ;
- l'au moins un autre terminal mobile (5b, 5c) est conçu pour produire une connexion de téléphonie mobile par la deuxième et/ou l'au moins une autre cellule de téléphonie mobile (1b, 1c) avec la deuxième et/ou l'au moins une autre unité de bande de base (10b, 10c) ;
- la deuxième et/ou l'au moins une autre entité de gestion de mobilité (14b, 14c) sont conçues pour autoriser un accès au réseau de données (6) de l'au moins un autre terminal mobile (5b, 5c) par la deuxième et/ou l'au moins une autre cellule de téléphonie mobile (1b, 1c) et la deuxième et/ou l'au moins une autre unité de bande de base (10b, 10c) et la deuxième et/ou l'au moins une autre passerelle de serveur (16b, 16c) et la deuxième et/ou l'au moins une autre passerelle de réseau de données par paquets (17b, 17c).
